# EUROPEAN PATENT APPLICATION

(11) **EP 4 629 482 A1**
(43) Date of publication of application: **08.10.2025**
(21) Application number: 23896078.5
(22) Date of filing: 27.07.2023
(51) Int. Cl.: H02K 1/27

(54) **ROTOR STRUCTURE AND PERMANENT MAGNET SYNCHRONOUS MOTOR**

(30) Priority: 29.11.2022 CN 202211510818
(71) Applicant: Gree Electric Appliances, Inc. of Zhuhai, Zhuhai, Guangdong 519031 (CN); Zhuhai Kaibang Motor Manufacture Co., Ltd., Zhuhai, Guangdong 519110 (CN)
(72) Inventor: HU, Yusheng, Zhuhai, Guangdong 519031 (CN); CHEN, Bin, Zhuhai, Guangdong 519031 (CN); XIAO, Yong, Zhuhai, Guangdong 519031 (CN); LI, Xia, Zhuhai, Guangdong 519031 (CN); SHI, Jinfei, Zhuhai, Guangdong 519031 (CN)
(74) Representative: Murgitroyd & Company
(86) International application number: PCT/CN2023/109455
(87) International publication number: WO 2024/113915

(57) **Abstract**

Provided in the present disclosure are a rotor structure and a permanent magnet synchronous motor. The rotor structure comprises: a first rotor core; a second rotor core, the second rotor core being circumferentially provided a plurality of mounting slots spaced apart, and magnetic isolation slots being provided on the side of the mounting slots close to the central axis of the second rotor core; first permanent magnets, which are axially magnetized, wherein a plurality of first permanent magnets are arranged in the circumferential direction of the second rotor core; and a plurality of second permanent magnets mounted in the plurality of mounting slots in a one-to-one correspondence. The first permanent magnets are respectively arranged at two ends of the second rotor core in the axial direction, and the first rotor core is arranged on the side of the first permanent magnets away from the second rotor core in the axial direction. Projection is performed on one end surface of the second rotor core in the axial direction, and in the projection plane, the projections of the first permanent magnets are configured to partially cover the projections of the magnetic isolation slots.

## Description

### CROSS-REFERENCE TO RELATED APPLICATIONS

The present application claims priority to Chinese Patent Application No. 202211510818.9, filed on November 29, 2022, which is hereby incorporated by reference in its entirety.

### TECHNICAL FIELD

The present disclosure relates to the field of permanent magnet synchronous motor technologies, and in particular, to a rotor structure and a permanent magnet synchronous motor.

### BACKGROUND

With the improvement of energy efficiency standards for permanent magnet synchronous motors, higher requirements are proposed for their energy efficiency classes. For the permanent magnet synchronous motors, it is necessary to further enhance a degree of high efficiency and a high torque density.

In a conventional permanent magnet synchronous motor, when magnet steel is magnetized in a tangential or radial magnetization method, a large amount of magnetic flux leakage is generated at two ends of the permanent magnet synchronous motor, resulting in a poor utilization rate of permanent magnets, and thus an operational performance of the permanent magnet synchronous motor is affected.

To solve this problem, a new type of permanent magnet synchronous motor has emerged in the conventional technologies, which reduces the magnetic flux leakage at two ends of the permanent magnet synchronous motor and improves the utilization rate of the permanent magnets by adding axial magnet steel at two ends of the permanent magnet synchronous motor. However, after adding the axial magnet steel, magnetic field lines of the axial magnet steel are required to pass through a rotor core where the tangentially magnetized magnet steel is located, so that the magnetic field lines in the rotor core are easy to saturate, and thus resulting in a low utilization rate of the axial magnet steel.

### SUMMARY

A main objective of the present disclosure is to provide a rotor structure and a permanent magnet synchronous motor to reduce a saturation effect of a rotor core caused by axial magnet steel, and thereby improving a utilization rate of the axial magnet steel.

To achieve the foregoing objective, according to an aspect of the present disclosure, a rotor structure is provided, including;
a first rotor core;
a second rotor core, the second rotor core being circumferentially provided with a plurality of mounting slots spaced apart, a side of the mounting slot close to a central axis of the second rotor core being provided with magnetic isolation groove;
a first permanent magnet, which is axially magnetized, a plurality of the first permanent magnets are arranged in a circumferential direction of the second rotor core; and
a plurality of second permanent magnets, the plurality of second permanent magnets being mounted in the plurality of mounting slots in one-to-one correspondence;
wherein, two ends of the second rotor core in an axial direction are respectively provided with the first permanent magnet, a side of the first permanent magnet away from the second rotor core along the axial direction is provided with the first rotor core;
performing a projection on an end surface of the second rotor core along the axial direction, in the projection plane, a projection of the first permanent magnet is configured to partially cover a projection of the magnetic isolation groove.

**In** some embodiments, a ratio of an area of the projection of the first permanent magnet covering the projection of the magnetic isolation groove to an area of the projection of the magnetic isolation groove is less than or equal to 75%.

In some embodiments, a ratio of the area of the projection of the first permanent magnet covering the projection of the magnetic isolation groove to the area of the projection of the magnetic isolation groove is less than or equal to 25%.

In some embodiments, when projecting onto the end surface of the second rotor core in the axial direction, in the projection plane, a deviation between a geometric center line of at least a pair of poles of the first permanent magnet and a corresponding center line of a rotor magnetic field of the second rotor core is less than or equal to 5°.

In some embodiments, when projecting onto the end surface of the second rotor core along an axial direction of the second rotor core, in the projection plane, an area of a pole of the first permanent magnet is s1, an area of a pole of the second rotor core is s2, and s1/s2 ≥ 1.

**In** some embodiments, 1.05 ≤ s1/s2 ≤ 1.95.

**In** some embodiments, when projecting onto the end surface of the second rotor core along the axial direction, in the projection plane, an area of a pole of the first permanent magnet is s1, an area of a pole of the second permanent magnet is s3, in a cross section passing through a central axis of the second rotor core, an area of a pole of the first permanent magnet is s4, and an area of a pole of the second permanent magnet is s5, where 0.8*s3 ≤ s1 ≤ 2.4*s5, and/or 0.3*s3 ≤ s4 ≤ 0.8*s5.

**In** some embodiments, when projecting onto the end surface of the second rotor core along the axial direction, in the projection plane, an included angle between lines connecting two endpoints of the pole of the first permanent magnet close to an outer circumference side of the rotor and a center of the second rotor core is α, an included angle between lines connecting two endpoints of a magnetic conductive portion of a pole of the second rotor core close to the outer circumference side of the rotor and the center of the second rotor core is β, and α/β ≥ 1.

**In** some embodiments, 1 ≤ α/β ≤ 1.62.

**In** some embodiments, when projecting onto the end surface of the second rotor core along the axial direction, in the projection plane, an area of a pole of the first permanent magnet is s1, a length of a line connecting the central axis and any point on an outer circumference of the second rotor core is j, and 1 ≤ s1/max(j) ≤ 20.

**In** some embodiments, 3 ≤ s1/max(j) ≤ 16.

**In** some embodiments, when projecting onto the end surface of the second rotor core along the axial direction, in the projection plane, an area of a pole of the first permanent magnet is s1, a thickness of the first permanent magnet along the axial direction of the second rotor core is b, and s1 is inversely proportional to b.

In some embodiments, a relationship between s1 and b satisfies a dimensionless formula s1 =A*b + C, wherein a value of A ranges from 5 to 20, and a value of C ranges from 120 to 400.

In some embodiments, when projecting onto the end surface of the second rotor core along the axial direction of the second rotor core, in the projection plane, an area of a pole of the first permanent magnet is s1, an area of a pole of the second rotor core is s2, an area of a pole of the second permanent magnet is s3, and 0.2 ≤ s2/(s1+s3) ≤ 1.

In some embodiments, 0.3 ≤ s2/(s1+s3) ≤ 0.6.

In some embodiments, when projecting onto the end surface of the second rotor core along the axial direction, in the projection plane, a length of a line connecting the central axis of the second rotor core and a center of an end edge of a pole of the first permanent magnet close to an outer circumferential side of the rotor is i, a maximum value of length of lines connecting the central axis of the second rotor core and points on an outer circumference of a rotor of the second rotor core is max(j), and max(i) ≤ max(j).

In some embodiments, when projecting onto the end surface of the second rotor core along the axial direction, in the projection plane, a length of a line connecting the central axis of the second rotor core and a center of an end edge of a pole of the second permanent magnet close to an outer circumferential side of the rotor is ii, and max(j) ≥ max(i) ≥ 0.8*ii.

In some embodiments, max(j) ≥ max(i) ≥ 0.95*ii.

In some embodiments, when projecting onto the end surface of the second rotor core along the axial direction, in the projection plane, a minimum value of a radial width e of the first permanent magnet is min(e), and a maximum value of a radial width g of the second permanent magnet is max(g), where 0.5 ≤ min(e)/max(g) ≤ 2.

In some embodiments, 0.6 ≤ min(e)/max(g) ≤ 1.6.

In some embodiments, when projecting onto the end surface of the second rotor core along the axial direction, in the projection plane, an area of a pole of the first permanent magnet is s1, an axial height of the second rotor core along a central axis of the second rotor core is x, and s1 is inversely proportional to x.

In some embodiments, s1 = B*x + D, where a value of B ranges from 25 to 100, and a value of D ranges from 400 to 1600.

In some embodiments, when projecting onto the end surface of the second rotor core along the axial direction, in the projection plane, a sum of included angles formed by lines connecting two endpoints of each pole of the first permanent magnet close to an outer circumference side of the rotor and a center of the second rotor core is α*2q, a ratio of the sum of the included angles to an circumferential angle of the second rotor core is a, a = α*2q/360, a thickness of the first permanent magnet along the axial direction of the second rotor core is b, and 2 ≤ b/a ≤ 6, where q is a quantity of pole pairs of the first permanent magnet.

In some embodiments, when projecting on the end surface of the second rotor core along the axial direction, in the projection plane, a length of a line connecting the central axis of the second rotor core and a center of a radially inner edge of a pole of the first permanent magnet is d, a length of a line connecting the central axis of the second rotor core and a center of an end edge of a pole of the first permanent magnet close to an outer circumferential side of the rotor is i, and 0.2 ≤ d/max(i) ≤ 0.8.

In some embodiments, 0.3 ≤ d/max(i) ≤0.6.

In some embodiments, when projecting onto the end surface of the second rotor core along the axial direction, in the projection plane, a length of a line connecting the central axis of the second rotor core and a center of a radially inner edge of a pole of the first permanent magnet is d, a length of a line connecting a central axis of the second rotor core and a center of a radially inner edge of a pole of the second permanent magnet is f, and 0≤ d/f ≤2.

In some embodiments, 0.8 ≤ d/f ≤ 1.6.

In some embodiments, diameters of the two first permanent magnets at two ends of the second rotor core are same.

According to another aspect of the present disclosure, a permanent magnet synchronous motor is provided, including a stator structure and a rotor structure, the rotor structure is the above rotor structure, where the stator structure is sleeved outside the rotor structure.

In some embodiments, the stator structure includes a stator core, a total height of the rotor structure along an axial direction of the permanent magnet synchronous motor is z, a height of the stator core along the axial direction of the permanent magnet synchronous motor is y, and z/y ≤ 4.

**In** some embodiments, 1.0 ≤ z/y ≤ 3.0.

**In** some embodiments, the stator structure includes a stator core, the stator core includes a tooth-slot interleaved stator lamination, the tooth-slot interleaved stator lamination is provided with two-segments of flat-bottomed tooth shoes, a tooth width of the tooth-slot stator interleaved lamination is E, a tooth shoe width is F, and E/max(F) ≥ 0.3.

**In** some embodiments, the stator structure includes a stator core, and an outer circumferential diameter of the first permanent magnets located at least one end of the second rotor core is smaller than an inner diameter of the stator core.

In some embodiments, an outer circumferential diameter of the first permanent magnets located at least one end of the second rotor core is smaller than a maximum diameter among outer circumferential diameters of the first rotor core and the second rotor core.

According to the technical solution of the present disclosure, the rotor structure includes a first rotor core, a second rotor core, a first permanent magnet, and a plurality of second permanent magnets. The second rotor core is provided with a plurality of mounting slots at intervals in a circumferential direction, and a side of plurality of the mounting slots close to a central axis of the second rotor core is provided with a magnetic isolation groove. The first permanent magnet is axially magnetized. A plurality of the first permanent magnets are arranged in a circumferential direction of the second rotor core. The plurality of second permanent magnets are mounted in the plurality of mounting slots in one-to-one correspondence. Two ends of the second rotor core in an axial direction are respectively provided with the first permanent magnets, and a side of the first permanent magnet away from the second rotor core along the axial direction is provided with the first rotor core. When projecting onto an end surface of the second rotor core along the axial direction, in a projection plane, a projection of the first permanent magnet is constructed to partially cover a projection of the magnetic isolation groove. This rotor structure enables the projection of the first permanent magnet to partially cover the projection of the magnetic isolation groove, so that an area of the first permanent magnet located within a range of the magnetic isolation groove is reduced, thereby reducing the number of magnetic field lines in this area, and thus the saturation effect of the second rotor core due to the first permanent magnet is reduced. Therefore, the number of magnetic flux linkage of the first permanent magnet that become invalid magnetic flux linkage due to no magnetic circuit is reduced, and thus a utilization rate of the first permanent magnet is improved.

### BRIEF DESCRIPTION OF THE DRAWINGS

The drawings, which constitute a part of the present disclosure, are used for providing a further understanding of the present disclosure. The illustrative embodiments of the present disclosure and the description thereof are used for explaining the present disclosure, and do not intend to be an improper limitation on the present disclosure. In the drawings:
FIG. 1 shows a three-dimensional structural diagram of a rotor structure according to an embodiment of the present disclosure.
FIG. 2 shows an exploded structural diagram of a rotor structure according to an embodiment of the present disclosure.
FIG. 3 shows a cross-sectional structural diagram of a rotor structure according to an embodiment of the present disclosure.
FIG. 4 shows a structural layout diagram of a rotor structure according to an embodiment of the present disclosure.
FIG. 5 shows a sectional structural diagram of a rotor structure according to an embodiment of the present disclosure.
FIG. 6 shows a dimensional structural diagram of a rotor structure according to an embodiment of the present disclosure.
FIG. 7 shows a dimensional structural diagram of a rotor structure according to an embodiment of the present disclosure.
FIG. 8 shows a dimensional structural diagram of a rotor structure according to an embodiment of the present disclosure.
FIG. 9 shows a dimensional structural diagram of a rotor structure according to an embodiment of the present disclosure.
FIG. 10 shows a diagram of a stator lamination of a stator structure according to an embodiment of the present disclosure.
FIG. 11 shows a relationship diagram between polarity arrangement and no-load magnetic flux linkage of a rotor structure according to an embodiment of the present disclosure.
FIG. 12 shows a relationship diagram between an angular deviation of a geometric center line of a first permanent magnet and a center line of a magnetic field and a no-load magnetic flux linkage of a rotor structure according to an embodiment of the present disclosure.
FIG. 13 shows a relationship diagram between α/β and a utilization rate of a permanent magnet of a rotor structure according to an embodiment of the present disclosure.
FIG. 14 shows a relationship diagram between α/γ and a utilization rate and a magnetic leakage coefficient of a permanent magnet of a rotor structure according to an embodiment of the present disclosure.
FIG. 15 shows a relationship diagram between 360/2p/α and a space utilization rate and a saturation coefficient of a rotor structure according to an embodiment of the present disclosure.
FIG. 16 shows a relationship diagram between b/a and a utilization rate and a demagnetization rate of a permanent magnet of a rotor structure according to an embodiment of the present disclosure.
FIG. 17 shows a relationship diagram between s1/s2 and a utilization rate of a permanent magnet of a rotor structure according to an embodiment of the present disclosure.
FIG. 18 shows a relationship diagram between b/m and a demagnetization rate of a permanent magnet of a rotor structure according to an embodiment of the present disclosure.
FIG. 19 shows a relationship diagram between c/m and a utilization rate of no-load magnetic flux linkage and a core loss of a rotor structure according to an embodiment of the present disclosure.
FIG. 20 shows a comparative diagram of magnetic leakage coefficients between a permanent magnet synchronous motor according to an embodiment of the present disclosure and a permanent magnet synchronous motor in the conventional technologies.
FIG. 21 shows a comparative diagram of air-gap flux density waveforms between a permanent magnet synchronous motor according to an embodiment of the present disclosure and a permanent magnet synchronous motor in the conventional technologies;
FIG. 22 shows a comparative diagram of air-gap flux density amplitudes between a permanent magnet synchronous motor according to an embodiment of the present disclosure and a permanent magnet synchronous motor in the conventional technologies.
FIG. 23 shows a comparative diagram of no-load magnetic flux linkages between a permanent magnet synchronous motor according to an embodiment of the present disclosure and a permanent magnet synchronous motor in the conventional technologies.
FIG. 24 shows a comparative diagram of output torque-current curves between a permanent magnet synchronous motor according to an embodiment of the present disclosure and a permanent magnet synchronous motor in the conventional technologies.
FIG. 25 shows a comparative diagram of output torque under same current between a permanent magnet synchronous motor according to an embodiment of the present disclosure and a permanent magnet synchronous motor in the conventional technologies.
FIG. 26 shows a comparative diagram of efficiency curves between a permanent magnet synchronous motor according to an embodiment of the present disclosure and a permanent magnet synchronous motor in the conventional technologies.
FIG. 27 shows a comparative diagram of copper loss curves between a permanent magnet synchronous motor according to an embodiment of the present disclosure and a permanent magnet synchronous motor in the conventional technologies.
FIG. 28 shows a comparative diagram of core loss between a permanent magnet synchronous motor according to an embodiment of the present disclosure and a permanent magnet synchronous motor in the conventional technologies.
FIG. 29 shows a relationship diagram between s1/s3 and a no-load magnetic flux linkage of a rotor structure according to an embodiment of the present disclosure.
FIG. 30 shows a relationship diagram between s1/s5 and a utilization rate of a no-load magnetic flux linkage of a rotor structure according to an embodiment of the present disclosure.
FIG. 31 shows a relationship diagram between s4/s3 and a demagnetization rate of permanent magnet of a rotor structure according to an embodiment of the present disclosure.
FIG. 32 shows a relationship diagram between s4/s5 of a rotor structure and a saturation coefficient of a permanent magnet synchronous motor according to an embodiment of the present disclosure.
FIG. 33 shows a relationship diagram between s1/max(j) and a magnetic flux concentration coefficient of a rotor structure according to an embodiment of the present disclosure.
FIG. 34 shows a relationship diagram between s2/(s1+s3) and a utilization rate and core loss of a rotor core of a rotor structure according to an embodiment of the present disclosure.
FIG. 35 shows a relationship diagram between b under one s1 and core loss and copper loss of a rotor structure according to an embodiment of the present disclosure.
FIG. 36 shows a relationship curve diagram between a*b and an air-gap flux density and a utilization rate of a first permanent magnet of a rotor structure according to an embodiment of the present disclosure.
FIG. 37 shows a relationship curve diagram between c/b and a saturation coefficient and a utilization rate of a rotor core of a rotor structure according to an embodiment of the present disclosure.
FIG. 38 shows a schematic structural diagram of a rotor structure according to an embodiment of the present disclosure.
FIG. 39 shows a schematic structural diagram of a first permanent magnet of a rotor structure according to an embodiment of the present disclosure.
FIG. 40 shows a schematic structural diagram of a second rotor core of a rotor structure according to an embodiment of the present disclosure.
FIG. 41 shows a schematic structural diagram of a motor according to an embodiment of the present disclosure.
FIG. 42 shows a relationship diagram between a ratio of a coverage area of a first permanent magnet on a magnetic isolation groove and a no-load magnetic flux linkage and a utilization rate of a permanent magnet of a rotor structure according to an embodiment of the present disclosure.
FIG. 43 shows a dimensional structural diagram of a rotor structure according to an embodiment of the present disclosure.
FIG. 44 shows a relationship diagram between a max(i)/ii and a top magnetic leakage coefficient of a second permanent magnet of a rotor structure according to an embodiment of the present disclosure.
FIG. 45 shows a relationship diagram between d/f and a bottom magnetic leakage coefficient of a second permanent magnet of a rotor structure according to an embodiment of the present disclosure.
FIG. 46 shows a dimensional structural diagram of a rotor structure according to an embodiment of the present disclosure.
FIG. 47 shows a relationship diagram between min(h)/max(i) and a no-load magnetic flux linkage of a rotor structure according to an embodiment of the present disclosure.
FIG. 48 shows a relationship diagram between a max(k)/d and a no-load magnetic flux linkage of a rotor structure according to an embodiment of the present disclosure.
FIG. 49 shows a relationship diagram between min(e)/max(g) and a magnetic leakage coefficient of a rotor structure according to an embodiment of the present disclosure.
FIG. 50 shows a relationship diagram between a saturation coefficient of a second rotor core and max(e)/min(o) and max(e)/min(o) of a rotor structure according to an embodiment of the present disclosure.
FIG. 51 shows a relationship diagram between max(l)/min(e) and a saturation coefficient of a first rotor core of a rotor structure according to an embodiment of the present disclosure.
FIG. 52 shows a relationship diagram between x/y and a utilization rate of a second rotor core and a utilization rate of a stator magnetic field of a rotor structure according to an embodiment of the present disclosure.
FIG. 53 shows a relationship diagram between s1 under one x and copper loss and core loss of a rotor structure according to an embodiment of the present disclosure.
FIG. 54 shows a relationship diagram between z/y and a utilization rate of a stator core of a rotor structure according to an embodiment of the present disclosure.
FIG. 55 shows a relationship diagram between a saturation coefficient of a second rotor core and b/x, b/y of a rotor structure according to an embodiment of the present disclosure.
FIG. 56 shows a schematic cross-sectional structural of FIG. 38 viewed along an A-A line.

The above drawings include following reference numerals:
1, first rotor core; 2, second rotor core; 3, first permanent magnet; 4, second permanent magnet; 5, first polarity; 6, second polarity; 7, third polarity; 8, fourth polarity; 9, interleaved tooth-slot stator lamination; 10, two-segment of flat-bottomed tooth shoes; 11, magnetic isolation groove; 12, stator core.

### DETAILED DESCRIPTION OF THE EMBODIMENTS

It should be noted that, in the case of no conflict, embodiments in the present application and features in the embodiments may be combined with each other. The present invention will be described in detail below with reference to the drawings and in combination with the embodiments.

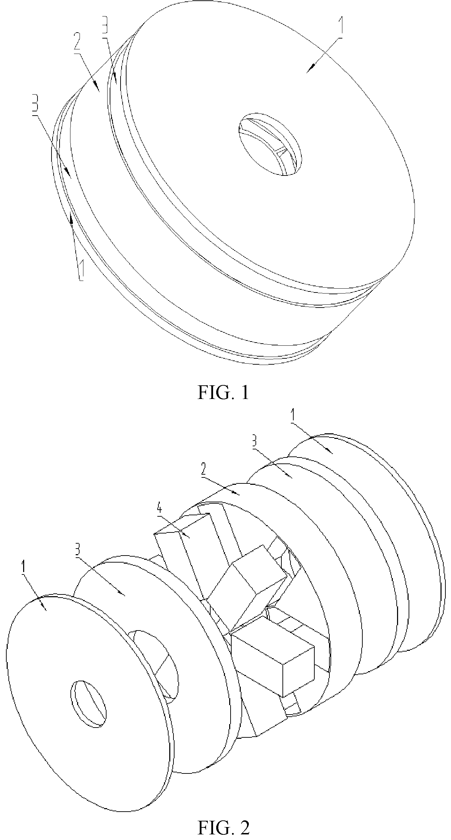

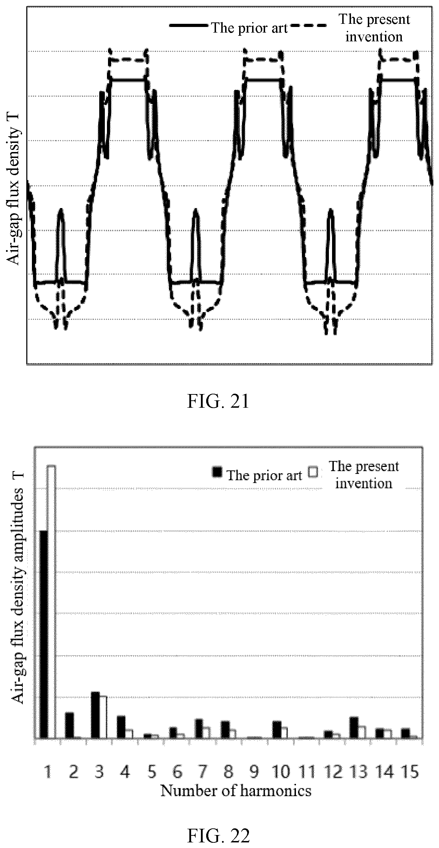

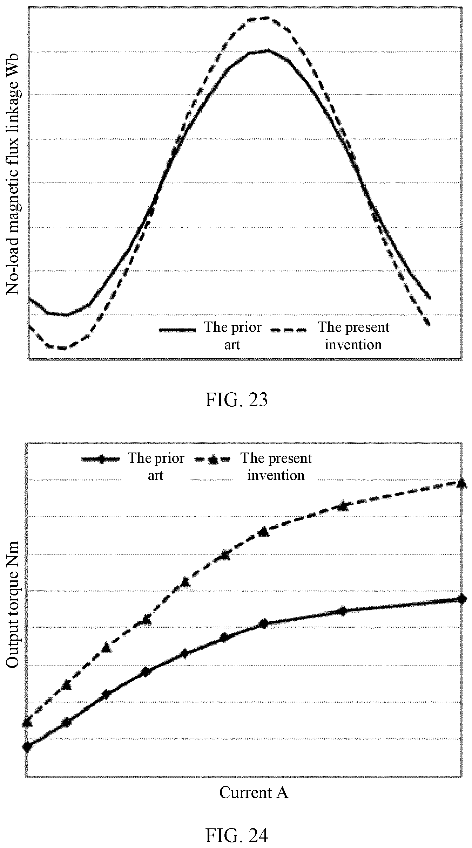

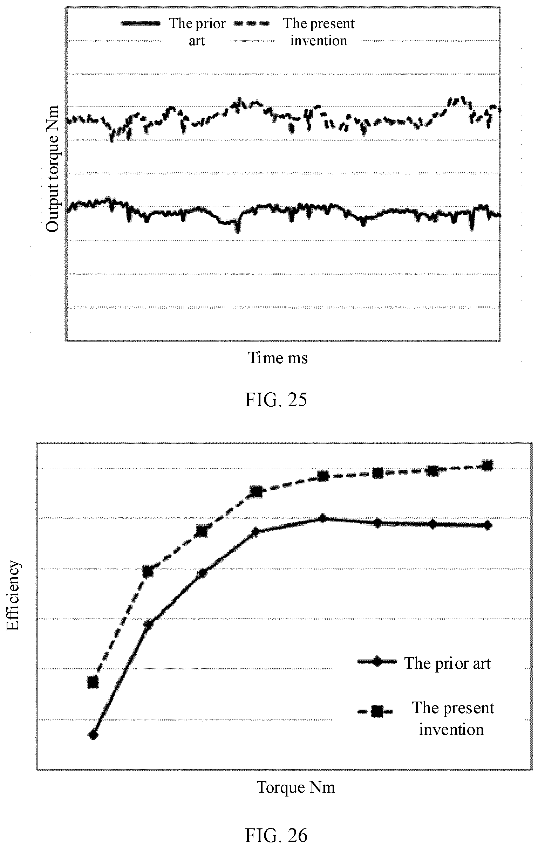

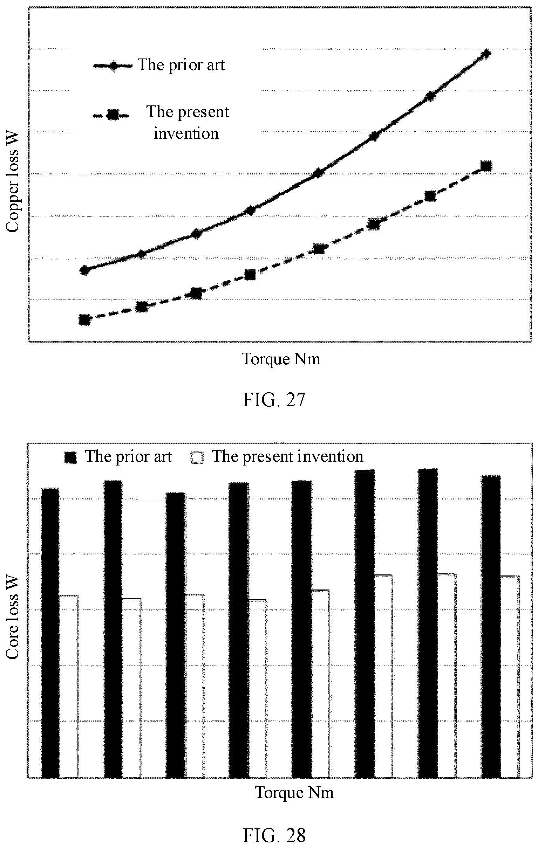

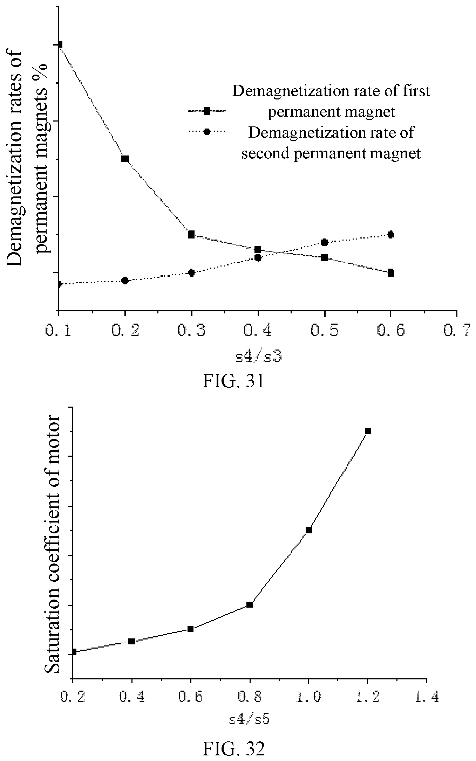

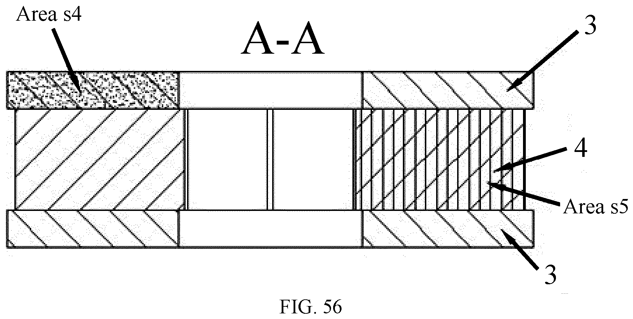

Referring to FIG. 1 to FIG. 56, according to the embodiments of the present invention, a rotor structure includes a first rotor core 1, a second rotor core 2, a first permanent magnet 3 and a plurality of second permanent magnets 4. The second rotor core is provided with a plurality of mounting slots at intervals in a circumferential direction. The first permanent magnet 3 is axially magnetized, and the first permanent magnet 3 includes a first polarity 5 and a second polarity 6. The plurality of second permanent magnets 4 include a third polarity 7 and a fourth polarity 8, and the plurality of second permanent magnets 4 are mounted in the plurality of mounting slots in one-to-one correspondence. Two ends of the second rotor core 2 in an axial direction are respectively provided with the first permanent magnets 3, and a side of the first permanent magnet 3 away from the second rotor core 2 along the axial direction is provided with the first rotor core 1. When projecting onto an end surface of the second rotor core 2 along an axial direction of the second rotor core 2, in a projection plane, a polarity arrangement sequence of the first permanent magnet 3 and the second permanent magnet 4 in a counterclockwise direction is the first polarity 5, the third polarity 7, the second polarity 6, and the fourth polarity 8, where the first polarity 5 is the same as the third polarity 7, and the second polarity 6 is the same as the fourth polarity 8.

The projection plane is perpendicular to a central axis of the second rotor core 2. The first rotor core 1, the second rotor core 2, the first permanent magnet 3, and the second permanent magnets 4 are all projected onto this projection plane, and thereby unifying these structures in a single plane to facilitate description of the structure and definition of dimensional relationships.

The first permanent magnet 3 and the second permanent magnet 4 are provided in the rotor structure at the same time, so that the first permanent magnet 3 and the second permanent magnet 4 provide magnetic field lines for a permanent magnet synchronous motor together, and thus an output capacity of the permanent magnet synchronous motor may be increased.

This rotor structure enables the polarity arrangement sequence of the first permanent magnet 3 and the second permanent magnet 4 in the counterclockwise direction to be the first polarity 5, the third polarity 7, the second polarity 6, and the fourth polarity 8, where the first polarity 5 is the same as the third polarity 7, and the second polarity 6 is the same as the fourth polarity 8. Magnetic field lines of the first polarity 5 and the second polarity 6 of the first permanent magnet 3 enter the second rotor core 2 in the axial direction, magnetic field lines of the third polarity 7 and the fourth polarity 8 of the second permanent magnet 4 enter the second rotor core 2 in a tangential or radial direction, so that directions of two groups of the magnetic field lines interfere with each other's magnetic paths within the second rotor core 2 to make the two groups of magnetic field lines be merely able to enter an air gap, thereby air-gap flux density being increased, and thus magnetic leakage at two ends of the second permanent magnet 4 is effectively reduced, and thus a no-load magnetic flux linkage is improved. Therefore, an efficiency and torque density of the permanent magnet synchronous motor is effectively improved, and thus the output capacity of the permanent magnet synchronous motor is increased.

In some embodiments, the polarity arrangement of the permanent magnet of the rotor structure is described by taking tangential magnetization of the second permanent magnet 4 as an example.

In the above embodiment, the polarity of the first permanent magnet 3 refers to a polarity of an end of the first permanent magnet 3 facing the second rotor core 2, where the polarities of the first polarity 5 and the second polarity 6 are opposite. For example, when the first polarity 5 is N pole, the second polarity 6 is S pole. The polarity of the second permanent magnet 4 refers to A polarity of a side of the second permanent magnet 4 facing the second rotor core 2, the polarity distribution of the second permanent magnet 4 is as follows: the third polarity 7 of the second permanent magnet 4 faces a polarity of the second rotor core 2 corresponding to the first polarity 5 of the first permanent magnet 3, the fourth polarity 8 of the second permanent magnet 4 faces a polarity of the second rotor core 2 corresponding to the second polarity 6 of the first permanent magnet 3, and the third polarity 7 of the second permanent magnet 4 is the same as the first polarity 5 of the first permanent magnet 3. When the first polarity 5 is N pole, the third polarity 7 is also the N pole. The fourth polarity 8 of the second permanent magnet 4 is the same as the second polarity 6 of the first permanent magnet 3. When the second polarity 6 is S pole, the fourth polarity 8 is also the S pole.

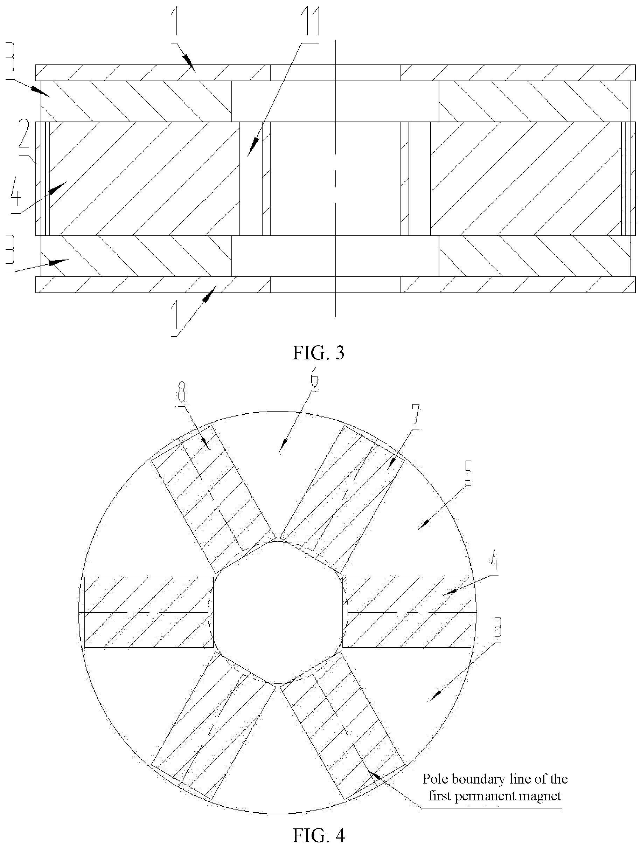

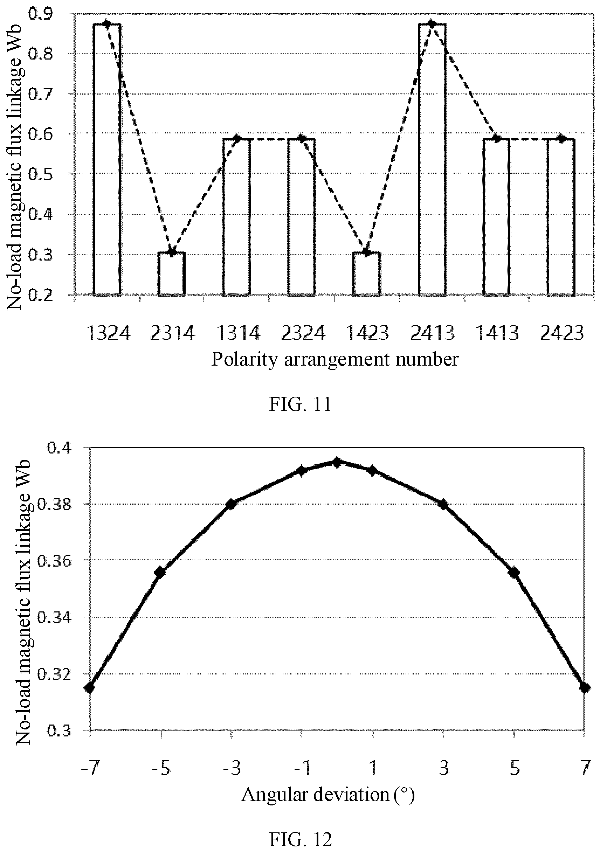

With reference to FIG. 4 and FIG. 11, a no-load magnetic flux linkage diagram of the permanent magnet synchronous motor under different polarity combinations are shown. With the first polarity 5 labeled as 1, the second polarity 6 as 2, the third polarity 7 as 3, and the fourth polarity 8 as 4, there are eight combinations as following: 1324, 2314, 1314, 2324, 1423, 2413, 1413, and 2423, where the no-load magnetic flux linkage of the combinations 1324 and 2413 are maximum, and the no-load magnetic flux linkage of the combinations 2314 and 1423 are minimum.

As shown in FIG. 11, when the polarity arrangement of the rotor structure is set in the order of the first polarity 5, the third polarity 7, the second polarity 6, and the fourth polarity 8 in a counterclockwise direction, the combinations 1324 or 2413 is formed. At this point, the magnetic field lines on both ends of the second rotor core 2 exhibit a flux path competition effect, so that the no-load flux linkage is maximum. If the relative orientation of the first polarity 5 and the second polarity 6 in the axial direction is not considered, the polarity arrangement is the first polarity 5, the third polarity 7, the first polarity 5, the fourth polarity 8 or the second polarity 6, the third polarity 7, the second polarity 6, and the fourth polarity 8, then the magnetic field lines on an end surface at an end of the second rotor core 2 exhibit the flux path competition effect, and the magnetic field lines on an end surface at another end of the second rotor core 2 exhibit a flux divergence effect, so that the no-load magnetic flux linkage is reduced by 32.8%. If the polarity arrangement is the second polarity 6, the third polarity 7, the first polarity 5, and the fourth polarity 8, then the magnetic field lines on two ends of the second rotor core 2 exhibit the divergence effect, so that the no-load magnetic flux linkage is greatly reduced by 65.2%.

In some embodiments, the first permanent magnet 3 is divided into a plurality of magnetizing regions in the circumferential direction, and magnetizing directions of the two adjacent magnetizing regions are opposite. When projecting onto an end surface of the second rotor core 2 along the axial direction of the second rotor core 2, in a projection plane, two sides of each magnetizing region partially in a circumferential direction thereof overlap with the two adjacent second permanent magnets 4on two circumferential sides of the. The magnetizing directions of the two adjacent second permanent magnets 4 are opposite, each magnetizing region, together with the two adjacent second permanent magnets 4, forms a magnetic field region, and the polarity of a side of the magnetizing region facing this magnetic field region is the same as the polarity of sides of the two adjacent second permanent magnets 4 facing this magnetic field region.

**In** this embodiment, in the plurality of magnetizing regions of the first permanent magnet 3 located at the two ends of the second rotor core 2, two magnetizing regions corresponding to a same magnetic field region have a same polarity facing this magnetic field region, the two second permanent magnets 4 on two sides of the magnetic field region in the circumferential direction also have a same polarity facing this magnetic field region, and this polarity is the same as the polarity of the magnetizing region facing this magnetic field region, to enable the magnetic field lines at two ends to be compressed towards the magnetic field region located in the middle, so that the flux path competition effect of the magnetic field lines in this magnetic field region may be more remarkable to make the no-load magnetic flux linkage be maximized, thereby the magnetic field strength of the permanent magnet synchronous motor is effectively enhanced, and thus the output capacity of the permanent magnet synchronous motor is improved.

**In** some embodiments, the second permanent magnets 4 is in a linear shape, and is arranged along a radial direction of the second rotor core 2. The second permanent magnet 4 adopts the linear shape and is arranged along the radial direction of the second rotor core 2, so that the second rotor core 2 is divided into a plurality of fan-shaped regions along the circumferential direction to enable the shape of the magnetic field region formed by the second rotor core 2 to match with the shape of each magnetizing region of the first permanent magnet 3. The second permanent magnet 4 forms two side walls of the magnetic field region, so that the magnetic field region and each permanent magnet have better structural compatibility, and an allocation and routing of the magnetic field lines are more reasonable, so that the magnetic field lines are able to be fully utilized to form the magnetic field, thereby the magnetic field strength is higher, and thus a performance capacity of the permanent magnet synchronous motor is stronger.

The second permanent magnet 4 may also be set in other structural forms, such as V-shape, and the like.

In some embodiments, a first side of one magnetizing region of the first permanent magnet 3 in the circumferential direction covers a same polarity region of an adjacent second permanent magnet 4, and a second side of this magnetizing region in the circumferential direction covers a same polarity region of an adjacent second permanent magnet 4.

**In** some embodiments, magnetizing regions of the first permanent magnet 3 may be arranged at intervals, that is, the magnetizing regions of the first permanent magnet 3 are not adjacent to each other, and there is a non-magnetizing region therebetween. By arranging the non-magnetizing region between the adjacent magnetizing regions, a ratio of the magnetizing region and the non-magnetizing region of the first permanent magnet may be adjusted by adjusting an area of the non-magnetizing region, so that a saturation level of the permanent magnet synchronous motor is reduced, thereby an utilization rate of the no-load magnetic flux linkage of the permanent magnet synchronous motor is improved, and meanwhile, a loss is reduced, and magnetizing difficulty of the first permanent magnet may be reduced, and thus a cost of the permanent magnets is reduced.

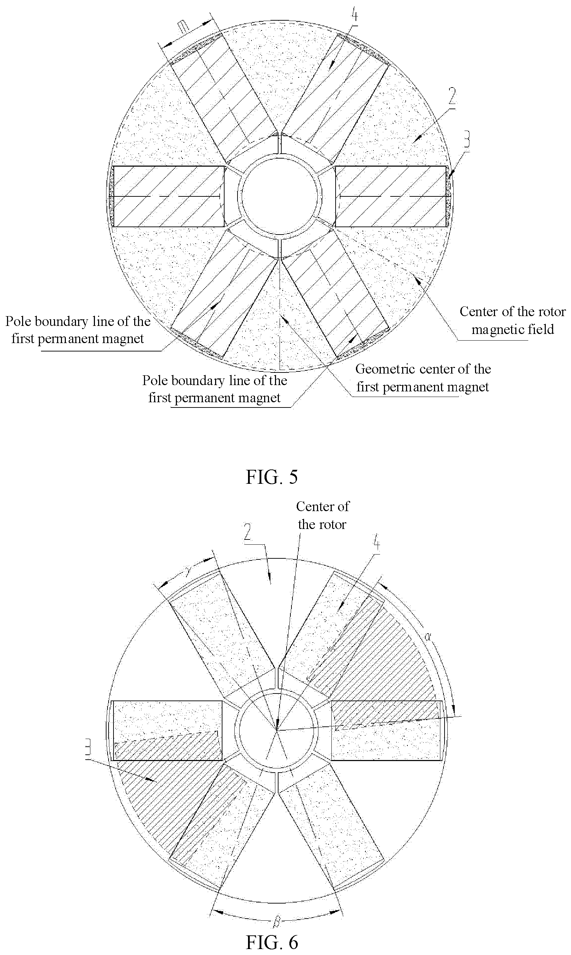

Referring to FIG. 5, in some embodiments, when projecting onto the end surface of the second rotor core 2 along the axial direction of the second rotor core 2, a deviation between a geometric center line of at least a pair of poles of the first permanent magnet 3 and a corresponding rotor magnetic field center line of the second rotor core 2 is less than or equal to 5°.

In some embodiments, geometric center lines of at least a pair of poles of the first permanent magnet 3 coincides with a center line of a rotor magnetic field of the corresponding second rotor core 2. By defining geometric positions of at least a portion of the poles of the first permanent magnet 3, magnetic leakage caused by divergence of the rotor magnetic field to an end surface of the rotor is reduced. **In** this embodiment, the geometric center line of one magnetizing region of the first permanent magnet 3 is a center line of boundary lines on two sides of this magnetizing region.

A center of a magnetic field generated by the second permanent magnet 4 in the second rotor core 2 is the center of the rotor magnetic field, and it is a position with the strongest magnetic field in the second rotor core 2. A center of a magnetic field of a magnetizing region of the first permanent magnet 3 is a geometric center of the magnetizing region of the first permanent magnet 3, and if an angular deviation of the center lines of the two magnetic fields is too large, the mutual flux path competition effect of the two groups of magnetic field lines is weakened, and the magnetic field of the second permanent magnet 4 takes the first permanent magnet 3 as its flux path, so that flux divergence occurs at the end, and thus the magnetic leakage is increased. When the center lines of the two magnetic fields are aligned, the mutual flux path competition effect of the two groups of magnetic field lines is optimal, so that the magnetic leakage is minimum.

Experimental verification shows that when an angular deviation between the geometric center line of the magnetizing region of the first permanent magnet 3 and the center line of the corresponding rotor magnetic field is 5°, the no-load magnetic flux linkage of the first permanent magnet 3 is reduced by 10% , current is increased by 10.5% and copper loss is increased by 21% compared with the angular deviation is 0°; and if the angular deviation is further increased, the current and the copper loss are further increased. As shown in FIG. 12 shows a variation curve that the no-load magnetic flux linkage changes with the angular deviation between the two, when the angular deviation between the two is greater than 5°, a reduction speed of the no-load magnetic flux linkage becomes faster, which means that the magnetic flux leakage is further increased.

Referring to FIG. 6, in some embodiments, when projecting onto the end surface of the second rotor core 2 along the axial direction of the second rotor core 2, in the projection plane, an included angle between lines connecting two endpoints of the pole of the first permanent magnet 3 close to an outer circumference side of the rotor and a center of the second rotor core 2 is α, an included angle between lines connecting two endpoints of a magnetic conductive portion of a pole of the second rotor core 2 close to the outer circumference side of the rotor and a center of the second rotor core 2 is β, and α/β ≥ 1. In some embodiments, 1 ≤ α/β ≤ 1.62.

The magnetic field lines of the first permanent magnet 3 pass through the second rotor core 2 and enters the air-gap to interact with a stator magnetic field to generate torque. By defining the relationship between α and β, the magnetic leakage at the end of the second permanent magnet 4is reduced, so that a utilization rate of the first permanent magnet 3 and the second permanent magnet 4 is improved.

Specifically, the magnetic conductive section of the second rotor core 2 serves as a direct flux path for the magnetic field lines of the first permanent magnet 3, if α/β is too large, a significant portion of the first permanent magnet 3 cannot directly contact with the second rotor core 2, so that the magnetic field lines of this portion of the first permanent magnet 3 lack the flux path, thereby this portion of the first permanent magnet 3 does not contribute to the air-gap flux density, and thus resulting in a low utilization rate of the first permanent magnet 3. Conversely, if α/β is too small, a coverage range of the first permanent magnet 3 on the end surface of the second rotor core 2 will be is smaller, which may cause that a larger area of the second permanent magnet 4 is not covered by the first permanent magnet 3, the magnetic field lines of the uncovered region of the second permanent magnet 4are not subjected to flux path competition from the magnetic field lines of the first permanent magnet 3, so that the magnetic leakage of the end of the second permanent magnet 4 is relatively large, and thus resulting in a low utilization rate of the second permanent magnet 4. As shown in FIG. curves show the variation of the utilization rates of the first permanent magnet and the second permanent magnet with the change of α/β. As α/β increases, the magnetic field lines of the first permanent magnet 3 increase, and its utilization rate initially increases, and then the utilization rate of the first permanent magnet begins to decrease due to limitation of the its path of the magnetic field lines thereof. In general, with the increase of α/β, the utilization rate of the second permanent magnet 4 first increases and then gradually stabilizes. The range of α/β is selected through comprehensively considering the utilization rates of the first permanent magnet 3 and the second permanent magnet 4.

When projecting onto the end surface of the second rotor core 2 along the axial direction of the second rotor core 2, in the projection plane, an included angle between lines connecting two endpoints of the pole of the first permanent magnet 3 close to an outer circumference side of the rotor and a center of the second rotor core 2 is α, an included angle between lines connecting two endpoints of a pole of the second permanent magnet 4 close to an outer circumference side of the rotor and a center of the rotor is γ, and α/γ > 1. In some embodiments, 2.0 ≤ α/γ ≤ 3.3.

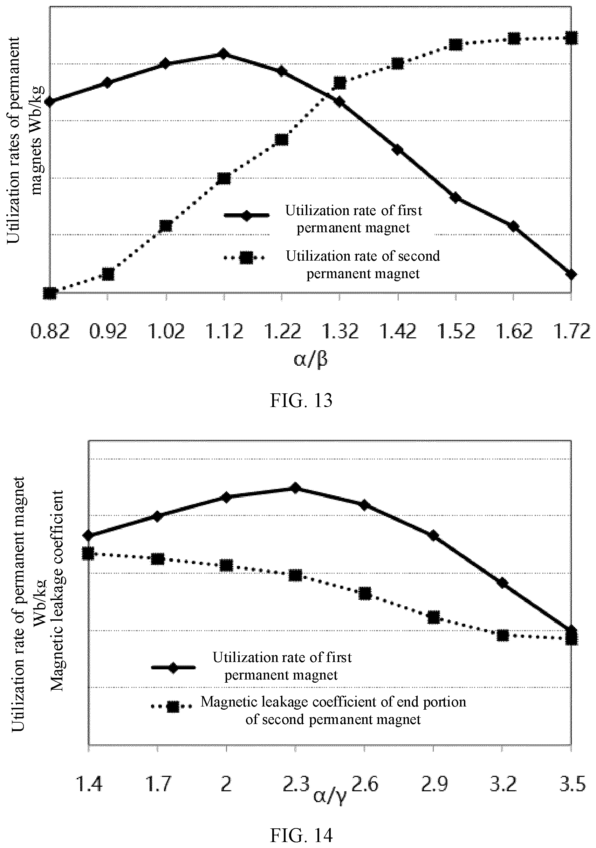

By defining the relationship between α and γ, on one hand, the magnetic leakage at the end of the second permanent magnet 4 is reduced, and on the other hand, the utilization rates of the first permanent magnet 3 and the second permanent magnet 4 is improved. Specifically, if α/γ is too large, the utilization rate of the first permanent magnet 3 is low; and if α/γ is too small, the magnetic leakage at the end of the second permanent magnet 4 is large, and the magnetic leakage does not contribute to the torque, so that the utilization rate of the second permanent magnet 4 is reduced. As shown in FIG. 14, the curves show the variation of the utilization rate of the first permanent magnet and a magnetic leakage coefficient at the end of the second permanent magnet with the change of α/γ. With the increase of α/γ, the utilization rate of the first permanent magnet increases first and then decreases, and the magnetic leakage coefficient of the end of the second permanent magnet decreases and gradually stabilizes. The range of α/γ is selected through comprehensively considering the utilization rate of the first permanent magnet and the magnetic leakage of the end of the second permanent magnet.

In some embodiments, when projecting onto the end surface of the second rotor core 2 along the axial direction of second rotor core 2, in the projection plane, a pole arc angle of one pole of the second rotor core 2 is 360/2p, and 360/2p/α ≥ 1, where p is the number of pole pairs of the second rotor core 2. In some embodiments, 1.3 ≥ 360/2p/α ≥ 1.

By defining the relationship between α and the rotor pole arc, a space on the end surface of the second rotor core 2 is maximally utilized to arrange the first permanent magnet 3, so that the output capacity of the permanent magnet synchronous motor is improved while ensuring that the rotor is not saturated. Specifically, when 360/2p/α = 1, α is equal to a pole arc angle of one pole of the rotor, at this time, a utilization rate of the space on the end surface of the second rotor core 2 is maximized, and correspondingly, the saturation level of the rotor will also be higher; and when 360/2p/α > 1, α is smaller than a pole arc angle of one pole of the second rotor core 2, at this point, the utilization rate of the space on the end surface of the second rotor core 2 decreases, and meanwhile, the saturation level of the rotor will also decrease.

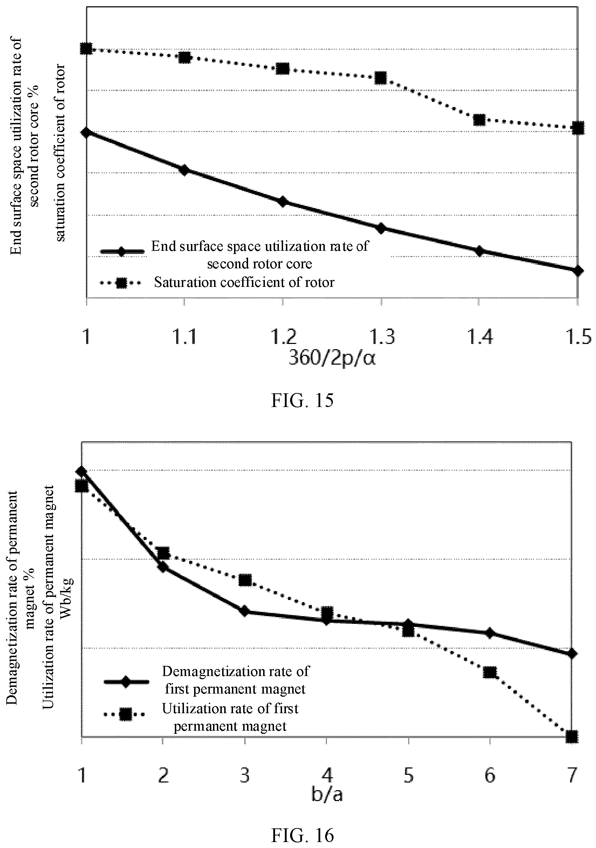

By adjusting the value of 360/2p/α, the utilization rate of the space on the end surface of the second rotor core 2 and saturation level of the rotor are simultaneously regulated. By defining its ratio range, a reasonable saturation level of the rotor is selected to maximize the utilization of the space on the end surface of the second rotor core 2. As shown in FIG. 15, the curves show the variation of the utilization rate of the space of the end surface of the second rotor core 2 and the rotor saturation coefficient with the change of 360/2p/α. With the increase of 360/2p/α, the utilization rate of the space on the end surface of the second rotor core 2 decreases, so that the rotor saturation coefficient also decreases. It should be noted that, a lower rotor saturation coefficient is not always better. An appropriate rotor saturation coefficient enables the iron core to be utilized reasonably. If the rotor saturation coefficient is too low, on one hand, it will cause an excess volume of the iron core and waste of the material; and on the other hand, it also means that there are too few magnetic field lines, so that the output capacity of the permanent magnet synchronous motor is reduced. The present invention preferably adopts a high utilization rate of the space of the end surface of the second rotor core 2 and moderate rotor saturation. If operating conditions of the permanent magnet synchronous motor are different, the value of 360/2p/α is selected through comprehensively considering the two.

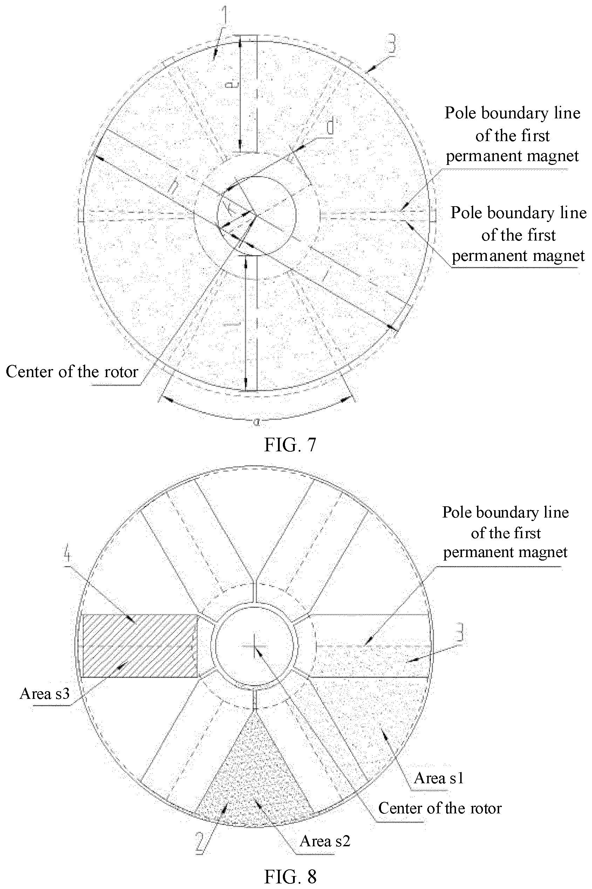

As shown in FIG. 8, in some embodiments, when projecting onto the end surface of the second rotor core 2 along the axial direction of the second rotor core 2, in the projection plane, an area of a pole of the first permanent magnet 3 is s1, an area of a pole of the second rotor core 2 is s2, and s1/s2 ≥ 1. This rotor structure allows the magnetic field lines of the first permanent magnet 3 to pass through the second rotor core 2 and enter the air-gap to interact with the stator magnetic field and generate torque. By defining the proportional relationship between the area of one pole of the first permanent magnet 3 and the area of one pole of the second rotor core 2 in the projection plane, the ratio of the area of one pole of the first permanent magnet 3 and the area of one pole of the second rotor core 2 is more reasonable, so that on the basis of ensuring the utilization rate of the first permanent magnet, the utilization rate of the second permanent magnet is improved, and the magnetic leakage of the end of the rotor is reduced, thereby a comprehensive utilization rate of the first permanent magnet 3 and the second permanent magnet 4 is improved, and thus a performance of the permanent magnet synchronous motor is improved. In some embodiments, 1.05 ≤ s1/s2 ≤ 1.95. In some further embodiments, 1.25 ≤ s1/s2 ≤ 1.85.

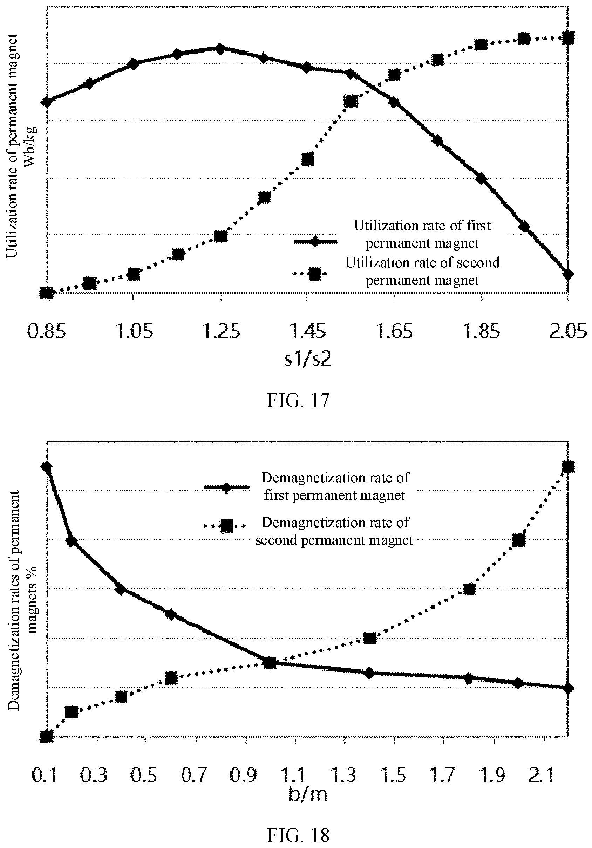

Herein, by defining the area of the first permanent magnet 3 and the area of the second rotor core 2, a low utilization rate of the first permanent magnet 3 and the second permanent magnet 4 is avoided. As shown in FIG. 17, the curves show the variation of the utilization rates of the first permanent magnet and the second permanent magnet with the change of s1/s2. The range of s1/s2 is selected through comprehensively considering the utilization rates of the first permanent magnet and the second permanent magnet.

It may be seen from the drawings that, when 1.25 ≤ s1/s2 ≤ 1.85, the comprehensive utilization rate of the first permanent magnet 3 and the second permanent magnet 4 is relatively high, so that functions of the first permanent magnet 3 and the second permanent magnet 4 are more fully exploited, and thus the working performance of the permanent magnet synchronous motor is improved.

In some embodiments, when projecting onto the end surface of the second rotor core 2 along the axial direction of second rotor core 2, in the projection plane, an area of a pole of the first permanent magnet 3 is s1, an area of a pole of the second permanent magnet 4 is s3, in a cross section passing through a central axis of the second rotor core 2, an area of the pole of the first permanent magnet 3 is s4, and an area of the pole of the second permanent magnet 4 is s5, where 0.8*s3 ≤ s1 ≤ 2.4*s5, and/or 0.3*s3 ≤ s4 ≤ 0.8*s5.

By defining the area relationship between the first permanent magnet 3 and the second permanent magnet 4, it may be ensured that the first permanent magnet 3 and the second permanent magnet 4 may both increase the output capacity of the permanent magnet synchronous motor and have a certain anti-demagnetization capability. Specifically, s1 and s4 respectively determine contribution of the first permanent magnet 3 to the output capacity of the permanent magnet synchronous motor and an anti-demagnetization capability of the first permanent magnet 3, and S5 and S3 respectively determine contribution of the second permanent magnet 4 to the output capacity of the permanent magnet synchronous motor and an anti-demagnetization capability of the second permanent magnet 4. By defining the relationship between s1 and s3, it is ensured that s1 has a certain value, so that the magnetic field lines in the axial direction are provided for the permanent magnet synchronous motor. By defining the relationship between s1 and s5, it is ensured that the magnetic flux linkage of the first permanent magnet 3 and the second permanent magnet 4 have an optimal ratio, so that the influence on a utilization rate of the no-load magnetic flux linkage of the permanent magnet synchronous motor due to saturation is reduced. By defining the relationship between s4 and s3, the anti-demagnetization capability of the first permanent magnet 3 and demagnetization consistency of the first permanent magnet 3 and the second permanent magnet 4 is ensured, and by defining the relationship between s4 and s5, over-saturation of the permanent magnet synchronous motor caused by an excessively large s4 is avoided.

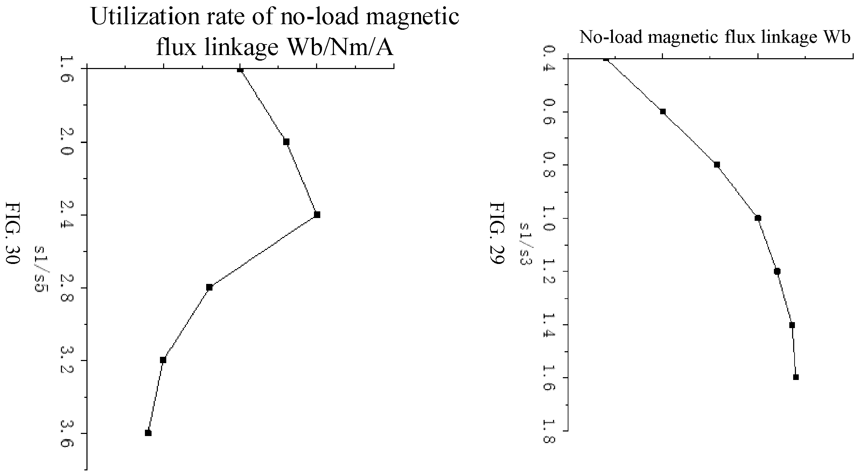

As shown in FIG. 29 to FIG. 32, with the increase of s1/s3, the no-load magnetic flux linkage first increases linearly and then gradually slows in growth. The optimal value of s1/s3 is selected to be at an inflection point where the no-load magnetic flux linkage linearly increases. With the increase of s1/s5, the utilization rate of the no-load magnetic flux linkage first increases and then decreases, and when the permanent magnet synchronous motor becomes over-saturated, the utilization rate of the no-load magnetic flux linkage drops sharply. The optimal value of s1/s5 is selected to be at an inflection point where the utilization rate of the no-load magnetic flux linkage changes. With the increase of s4/s3, under a same demagnetization current, a demagnetization rate of the first permanent magnet 3 decreases, a demagnetization rate of the second permanent magnet 4 slightly increases, and a difference between the demagnetization rates of the first permanent magnet 3 and the second permanent magnet 4 tends to decrease, so that the demagnetization consistency of the first permanent magnet 3 and the second permanent magnet 4 is improved. With the increase of s4/s5, the saturation level of the permanent magnet synchronous motor increases. The optimal value of s4/s5 is selected to be at an inflection point where the permanent magnet synchronous motor becomes over-saturated.

In some embodiments, when projecting onto the end surface of the second rotor core 2 along the axial direction of second rotor core 2, in the projection plane, an area of a pole of the first permanent magnet 3 is s1, a length of a line connecting the central axis 2 and any point on an outer circumference of the second rotor core is j, and 1 ≤ s1/max(j) ≤ 20. In some embodiments, 3 ≤ S 1/max(j) ≤ 16. In some further embodiments, 5 ≤ S 1/max(j) ≤ 13.

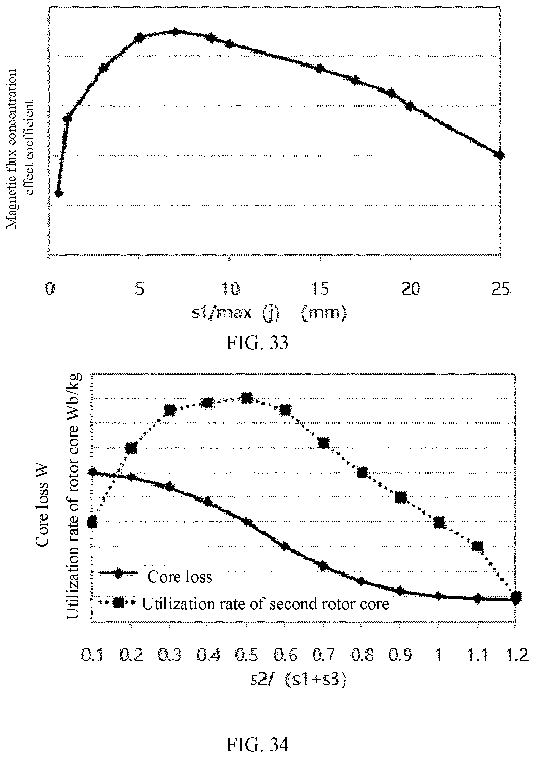

By defining the range of this ratio, a magnetic flux concentration effect of the permanent magnet synchronous motor is enhanced, and thus the output capacity of the permanent magnet synchronous motor is increased. Specifically, if s1/max(j) is too small, then s1 is too small or max(j) is too large, which will result in two cases: one is that its coverage over the end of the second permanent magnet 4 is too small because the area of s1 is too small, thereby resulting in increased magnetic leakage at the end of the second permanent magnet 4, and thus the magnetic flux concentration effect of the permanent magnet synchronous motor is weakened; and the other one is that the number of pole pairs of the permanent magnet synchronous motor is too many, which is not conducive to the arrangement of the permanent magnets. If s1/max(j) is too large, then s1 is too large or max(j) is too small, so that the number of pole pairs of the permanent magnet synchronous motor is too small, and thus the magnetic flux concentration effect of the permanent magnet synchronous motor is weak. As shown in FIG. 33, the curve shows the variation of the magnetic flux concentration effect coefficient of the permanent magnet synchronous motor with the change of s1/max(j). With s1/max(j) increases, the magnetic flux concentration effect coefficient decreases first and then decreases, that is, if s1/max(j) is too large or too small, they will lead to the magnetic flux concentration effect of the permanent magnet synchronous motor being weakened.

In some embodiments, when projecting onto the end surface of the second rotor core 2 along the axial direction of second rotor core 2, in the projection plane, an area of a pole of the first permanent magnet 3 is s1, an area of a pole of the second rotor core 2 is s2, an area of a pole of the second permanent magnet 4 is s3, and 0.2 ≤ s2/(s1+s3) ≤ 1. In some embodiments, 0.3 ≤ s2/(s1+s3) ≤ 0.6.

By limiting the range of this ratio, appropriate magnetic circuit areas for the magnetic field lines of the first permanent magnet 3 and the second permanent magnet 4 is ensured. On one hand, it prevents the permanent magnet synchronous motor from saturating due to a too-small magnetic circuit area, which would lead to increased iron loss; and on the other hand, it avoids an overlarge volume of the permanent magnet synchronous motor due to an overlarge magnetic circuit area, which results in material waste. As shown in FIG. 33, the curves show the variation of the core loss and a utilization rate of the second rotor core with the change of s1/max(j). With the increase of s2/(s1+s3), the saturation level of the permanent magnet synchronous motor decreases, and the core loss reduces, and after reaching a certain saturation level, the variation of the core loss gradually stabilizes. After the saturation level of the permanent magnet synchronous motor decreases, an effective magnetic circuit area increases, so that the magnetic field lines pass through smoothly, and thus the utilization rate of the second rotor core is increased. After a certain saturation level is reached, further increasing the magnetic circuit area will cause the utilization rate of the second rotor core to start decreasing.

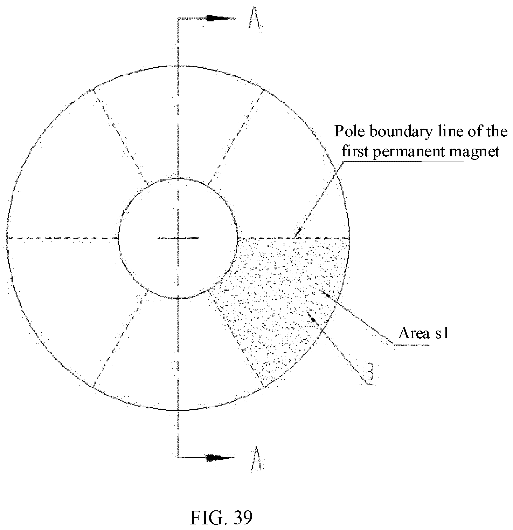

Referring to FIG. 6 and FIG. 39, in some embodiments, a thickness of the first permanent magnet 3 along the axial direction of the second rotor core 2 is b, when projecting onto the end surface of the second rotor core 2 along the axial direction of second rotor core 2, in the projection plane, a sum of included angles formed by lines connecting two endpoints of each pole of the first permanent magnet 3 close to an outer circumference side of the rotor and a center of the second rotor core 2 is α*2q, a ratio of the sum of the included angles to an circumferential angle of the second rotor core 2 is a, a = α*2q/360, and 2 ≤ b/a ≤ 6, where q is a quantity of pole pairs of the first permanent magnet 3. In some embodiments, 3 ≤ b/a ≤ 5.

By limiting the ratio relationship between b and a, it may be ensured that the first permanent magnet has a certain thickness along the axial direction, so that the anti-demagnetization capability of the first permanent magnet is enhanced. Specifically, a = α*2q/360, where q is the number of pole pairs of the first permanent magnet 3, a represents a total pole arc coefficient of the first permanent magnet 3, and this value determines a range of a demagnetization magnetic field directly borne by the first permanent magnet 3. When a is small, the range of the demagnetization field borne by the first permanent magnet 3 is also small, so that the required value of the thickness b along the axial direction to ensure the anti-demagnetization capability of the first permanent magnet 3 is also small, and vice versa. By limiting the minimum value of b/a, the anti-demagnetization capability of the first permanent magnet 3 is ensured; and by limiting the maximum value of b/a, the utilization rate decrease of the first permanent magnet 3 caused by wasting of the first permanent magnet 3 is avoided on a premise of ensuring the anti-demagnetization capability of the first permanent magnet 3. As shown in FIG. 16, the curves show the variation of a demagnetization rate and a utilization rate of the first permanent magnet with the change of b/a. With the increase of b/a, the demagnetization rate of the first permanent magnet under a same current decreases with a diminishing decreasing trend, but the utilization rate of the first permanent magnet is reduced with an accelerating decreasing trend. The optimal range of b/a is selected through comprehensively considering the anti-demagnetization capability and the utilization rate of the first permanent magnet 3.In some embodiments, when projecting on the end surface of the second rotor core 2 along the axial direction of second rotor core 2, in the projection plane, an area of a pole of the first permanent magnet 3 is s1, a thickness of the first permanent magnet 3 along the axial direction of the second rotor core 2 is b, and s1 is inversely proportional to b, where the unit of the area s1 is mm², and the unit of the thickness b is mm.

In some embodiments, a relationship between s1 and b satisfies a dimensionless formula s1 =A*b + C, where a value of A ranges from 5 to 20, and a value of C ranges from 120 to 400.

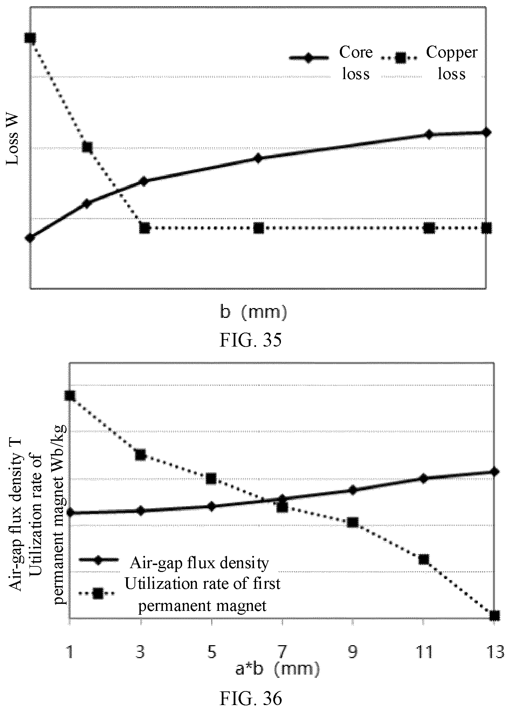

By limiting the relationship between s1 and b, the saturation level of the permanent magnet synchronous motor is reduced, so that the utilization rate of the no-load magnetic flux linkage of the permanent magnet synchronous motor is improved, and thus the core loss of the permanent magnet synchronous motor is reduced. Specifically, s1 represents a magnetic supply area of one pole of the first permanent magnet 3, and when the first permanent magnet 3 has a relatively large magnetic supply area, the rotor will reach a proper saturation level under a relatively small thickness b in the axial direction, and if the value of b continues increasing, the rotor will be over-saturated, which not only weakens the improving effect of the no-load magnetic flux linkage, but also increases the core loss; and vice versa. Therefore, s1 and b are inversely proportional. By limiting a relation curve of s1 and b, on one hand, the first permanent magnet 3 may be maximum utilized to improve the magnetic flux linkage of the permanent magnet synchronous motor, so that the current and copper loss is reduced; and on the other hand, the permanent magnet synchronous motor is prevented from being over-saturated, so that the core loss is reduced. When the copper loss and the core loss reach balance, the performance of the permanent magnet synchronous motor is the best. Experimental verification has shown that, under a certain value of s1, when a proper b is selected, the core loss and the copper loss of the permanent magnet synchronous motor accounts for 52% and 48% respectively, and the balance is basically achieved. At this point, if the value of b is increased by 1mm, the core loss of the permanent magnet synchronous motor is increased by 10.2%, and reduction amplitude of the copper loss is less than 1%, so that the performance of the permanent magnet synchronous motor is deteriorated. As shown in FIG. 35, the core loss and copper loss change trend of the permanent magnet synchronous motor with the increase of b under a same s1 is illustrated.

In some embodiments, when projecting on the end surface of the second rotor core 2 along the axial direction of second rotor core 2, in the projection plane, a sum of included angles formed by lines connecting two endpoints of each pole of the first permanent magnet 3 close to an outer circumference side of the rotor and a center of the second rotor core 2 is α*2q, a ratio of the sum of the included angles to an circumferential angle of the second rotor core 2 is a, a = α*2q/360, and 1.7 ≤ a*b ≤ 12.

In some embodiments, 2 ≤ a*b ≤ 10.

By limiting the product relationship between a and b, it may be ensured that the first permanent magnet 3 occupies a certain angle on the second rotor core 2, so that the magnetic field strength of the permanent magnet synchronous motor is enhanced, and thus the output capacity of the permanent magnet synchronous motor is improved. Specifically, a = α*2q/360, where q is the number of pole pairs of the first permanent magnet 3, a represents a total pole arc coefficient of the first permanent magnet 3, and this value determines a size of a magnetic supply area of the first permanent magnet 3. When a is relatively small, the magnetic area of the first permanent magnet 3 is small, in order to reach a proper saturation level, a large thickness b in the axial direction is required; and vice versa. By limiting the minimum value of a*b, the first permanent magnet 3 occupies a certain area on the second rotor iron core 2 to enhance the magnetic field strength of the rotor. By limiting the maximum value of a*b, the waste of the first permanent magnet 3 is avoided on the premise of ensuring the magnetic field strength of the rotor. As shown in FIG. 36, the curves illustrate the variation of an air-gap flux density and a utilization rate of the first permanent magnet with the change of a*b. With the increase of a*b, the air-gap flux density is improved, and after the magnetic circuit is saturated, the increase amplitude of air-gap flux density gradually decreases, and the decrease amplitude of the utilization rate of the first permanent magnet accelerates.

In some embodiments, a thickness of the second permanent magnet 4 in a magnetizing direction of the second permanent magnet 4 is m, and 0.2 ≤ b/m ≤ 2.

In some embodiments, 0.4 ≤ b/m ≤ 1.4.

By limiting the relationship between b and m, it is ensured that the first permanent magnet 3 and the second permanent magnet 4 both have certain anti-demagnetization capability, and meanwhile the demagnetization consistency is ensured. Specifically, the anti-demagnetization capability of the first permanent magnet 3 depends on the thickness b in the axial direction of the first permanent magnet 3, and the anti-demagnetization capability of the second permanent magnet 4 depends on the thickness m in the magnetizing direction of the second permanent magnet 4. By limiting the minimum value of b/m, the anti-demagnetization capability of the first permanent magnet 3 and the second permanent magnet 4 is ensured. By limiting the value range of b/m, the consistency of the anti-demagnetization capability of the first permanent magnet 3 and the second permanent magnet 4 is ensured. By limiting the maximum value of b/m, the cost of the permanent magnet is reduced on the premise of ensuring the anti-demagnetization capability. As shown in FIG. 18, the curves illustrate the variation of demagnetization rates of the first permanent magnet and the second permanent magnet with the change of b/m under a same demagnetization current. With the increase of b/m, the demagnetization rate of the first permanent magnet decreases, the demagnetization rate of the second permanent magnet increases, the demagnetization consistency of the first permanent magnet and the second permanent magnet improves first and then deteriorates. The optimal range of b/m is selected by considering the anti-demagnetization capability of the permanent magnets and the demagnetization consistency thereof.

In some embodiments, a thickness of the first rotor core 1 in an axial direction of the second rotor core 2 is c, and 0.1 ≤ c/b ≤ 1.

c is greater than or equal to an axial thickness of a single core lamination of the second rotor core 2.

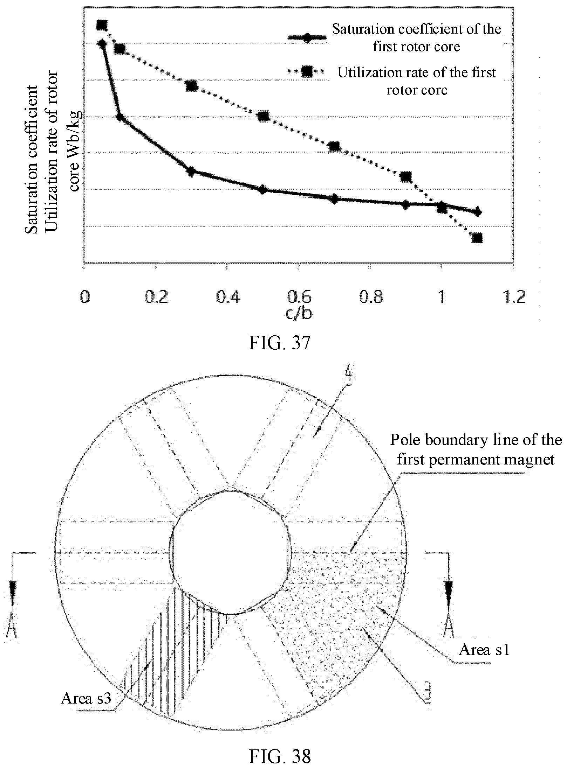

By limiting the relationship between b and c, it is ensured that the first rotor core 1 and the first permanent magnet 3 have an optimal thickness ratio, so that the utilization rate of the permanent magnet synchronous motor is increased while the output capacity of the permanent magnet synchronous motor is improved. Specifically, the magnetic field lines of the first permanent magnet 3 form a circuit along an axial direction thereof and pass through the first rotor core 1, and the first rotor core 1 and the first permanent magnet 3 are directly adjacent to each other, so as to avoid the loss of the magnetic field lines of the first permanent magnet 3 in the circulation process. In addition, the thickness in the axial direction of the first rotor core 1 determines smoothness and saturation level of the magnetic field lines of the first permanent magnet 3 passing through the magnetic circuit. By limiting the minimum value of c/b, the unsaturation of the magnetic circuit of the first permanent magnet 3 is ensured, so that the magnetic flux linkage of the first permanent magnet 3 is improved. By limiting the maximum value of c/b, the utilization rate of the first rotor core 1 is increased, and thus the cost thereof is reduced. As shown in FIG. 37, the curves illustrate the variation of a saturation coefficient and a utilization rate of the first rotor core with the change of c/b. With the increase of c/b, the saturation coefficient and the utilization rate of the first rotor core 1 both decrease. The optimal range of c/b is selected by comprehensively considering the saturation level and the cost of the first rotor core.

Referring to FIG. 7, in some embodiments, when projecting onto the end surface of the second rotor core 2 along the axial direction of second rotor core 2, in the projection plane, a length of a line connecting the central axis of the second rotor core 2 and a center of a radially inner edge of a pole of the first permanent magnet 3 is d, a length of a line connecting the central axis of the second rotor core 2 and a center of an end edge of a pole of the first permanent magnet 3 close to an outer circumferential side of the rotor is i, and 0.2 ≤ d/max(i) ≤ 0.8. In some embodiments, 0.3 ≤ d/max(i) ≤ 0.6.

By limiting the relationship of d/max(i), it helps to reduce assembly difficulty of the permanent magnet synchronous motor and processing difficulty of the first permanent magnet 3. Specifically, if d/max(i) is too small, an inner side of the first permanent magnet 3 is too small or an outer side is too large, causing the first permanent magnet 3 to be difficult to assemble with a rotating shaft and a stator; and if d/max(i) is too large, the inner side of the first permanent magnet 3 is too large or the outer side is too small, a distance between the inner side and the outer side is too small, so that the processing difficulty of the first permanent magnet 3 is increased or even cannot be processed.

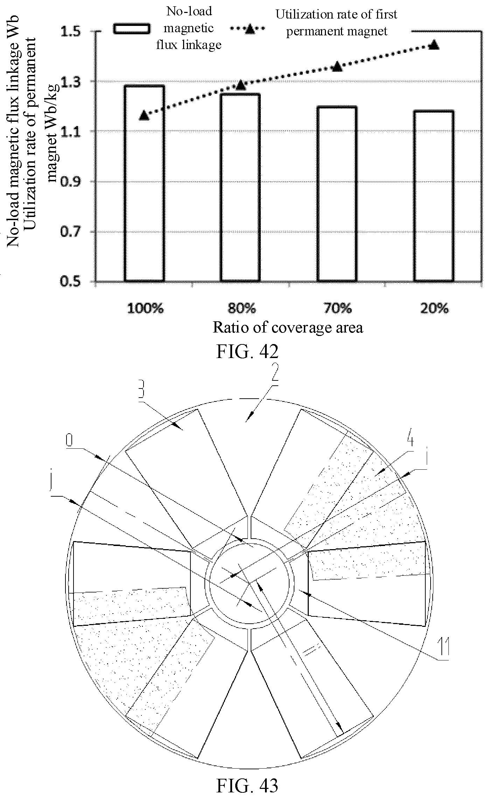

Referring to FIG. 43, in some embodiments, when projecting onto the end surface of the second rotor core 2 along the axial direction of second rotor core 2, in the projection plane, a length of a line connecting the central axis of the second rotor core 2 and a center of an end edge of a pole of the first permanent magnet 3 close to an outer circumferential side of the rotor is i, a maximum value of a line connecting the central axis of the second rotor core 2 and any point on an outer circumference of the rotor of the second rotor core 2 is max(j), and max(i) ≤ max(j).

In some embodiments, a length of a line connecting the central axis of the second rotor core 2 and a center of an end edge of a pole of the second permanent magnet 4 close to an outer circumferential side of the rotor is ii, and max(j) ≥ max(i) ≥ 0.8*ii.

In some embodiments, max(j) ≥ max(i)≥ 0.95*ii.

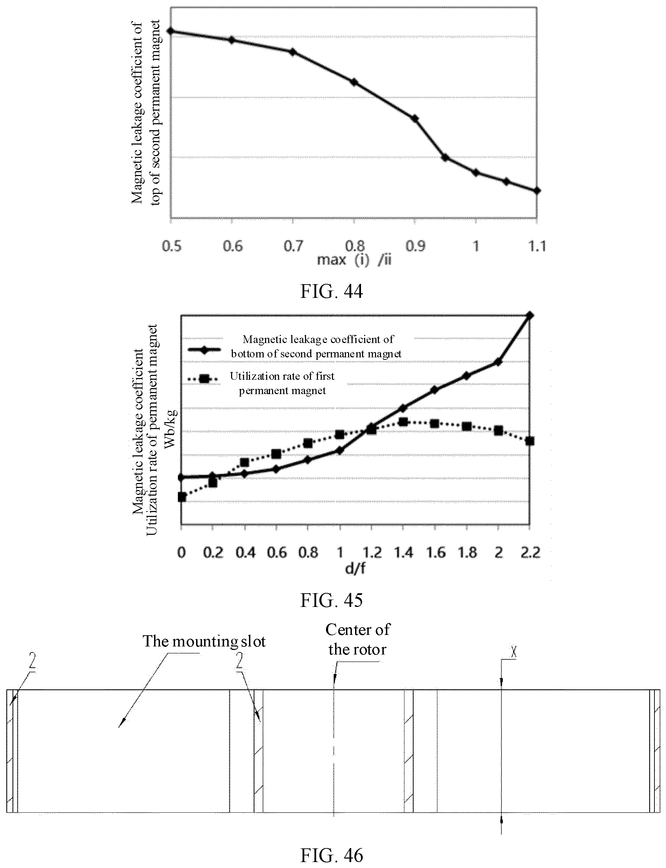

By limiting the relationship between max(i), ii, and max (j), a length of the line connecting the center of the rotor and the center of the first permanent magnet 3 close to the outer circumferential side of the rotor is limited. On one hand, the contribution level of the first permanent magnet 3 and the second permanent magnet 4 to the output capacity of the permanent magnet synchronous motor is improved, and on the other hand, the assembly difficulty of the permanent magnet synchronous motor is reduced. Specifically, the end of the second permanent magnet 4 close to the outer circumference side of the rotor is easy to occur magnetic leakage (top magnetic leakage), the magnetic field lines of the first permanent magnet 3 interfere with the magnetic paths of the magnetic field lines of the second permanent magnet 4 in this region, so that the magnetic leakage path thereof is cut off, and thereby attenuating the top magnetic leakage. By limiting the relationship between max(i) and ii, it may be ensured that the magnetic fields line of the first permanent magnet 3 is within its action range, and thereby effectively reducing the top magnetic leakage of the second permanent magnet 4. In addition, by limiting the relationship between max (j) and max (i), so that requirement of the first permanent magnet 3 on assembly precision may be reduced, and thus the assembly difficulty of the permanent magnet synchronous motor is reduced. As shown in FIG. 44, the curve illustrates the relationship between a top magnetic leakage coefficient of the first permanent magnet and the max(i)/ii. With the increase of max(i)/ii, the top magnetic leakage coefficient of the first permanent magnet decreases and the decreasing trend changes. When the max (i)/ii is greater than 0.8, a first inflection point appears in the decreasing trend; and when the max (i)/ii is greater than 0.95, a second inflection point appears in the decreasing trend.

In some embodiments, a length of a line connecting the central axis of the second rotor core 2 and a center of a radially inner edge of a pole of the first permanent magnet 3 is d, a length of a line connecting the central axis of the second rotor core 2 and a center of a radially inner edge of a pole of the second permanent magnet 3 is f, and 0 ≤ d/f ≤ 2.

In some embodiments, 0.8 ≤ d/f ≤ 1.6.

By limiting the proportional relationship of d/f, the length of the line connecting the center of the rotor and the center of the first permanent magnet 3 close to a rotating shaft side is limited, which may improve the utilization rates of the first permanent magnet 3 and the second permanent magnet 4. Specifically, the end of the second permanent magnet 4 close to the rotating shaft side of the rotor is easy to occur magnetic leakage (bottom magnetic leakage), and the magnetic field lines of the first permanent magnet 3 interfere with the magnetic paths of the magnetic field lines of the second permanent magnet 4, so that the bottom magnetic leakage path is cut off, and thereby attenuating the bottom magnetic leakage of the second permanent magnet 4. By limiting the maximum value of d/f, it may be avoided that the bottom magnetic leakage of the second permanent magnet 4 increases because the second permanent magnet 4 exceeding the action range of the magnetic field lines of the first permanent magnet 3 too much, which will cause the utilization rate of the second permanent magnet to reduce. By limiting the minimum value of d/f, the first permanent magnet 3 is prevented from material waste and a low utilization rate caused by reduced axial magnetic field lines due to an excessively small inner side volume of the first permanent magnet 3. As shown in FIG. 45, the curves illustrate the relationship between a bottom magnetic leakage coefficient of the second rotor core, a utilization rate of the first permanent magnet and d/f. With the increase of d/f, the bottom magnetic leakage coefficient of the second permanent magnet increases, and the increase is slow when d/f is less than 1.6, then, when d/f is 2, a second inflection point occurs. With the increase of d/f, the utilization rate of the first permanent magnet first increases, and then, the utilization rate of the first permanent magnet begins to decrease because the reduction in the inner side of the first permanent magnet affects the axial magnetic field lines. Referring to FIG. 7, in some embodiments, when projecting onto the end surface of the second rotor core 2 along the axial direction of second rotor core 2, in the projection plane, a length of a line connecting the central axis of the second rotor core 2 and a center of an end edge of a pole of the first permanent magnet 3 close to an outer circumferential side of the rotor is i, a length of a line connecting the central axis of the second rotor core 2 and any point on an outer circumference of the second rotor core 2 is j, a length of a line connecting the central axis of the second rotor core 2 and any point on an outer circumference of the first rotor core 1 is h, max(h) ≤ max(j), and/or, min(h) ≥ 0.8*max(i).

In some embodiments, 0.9 ≤ min(h)/max(i) ≤ 1.4.

In some embodiments, 1 ≤ min(h)/max(i) ≤ 1.3.

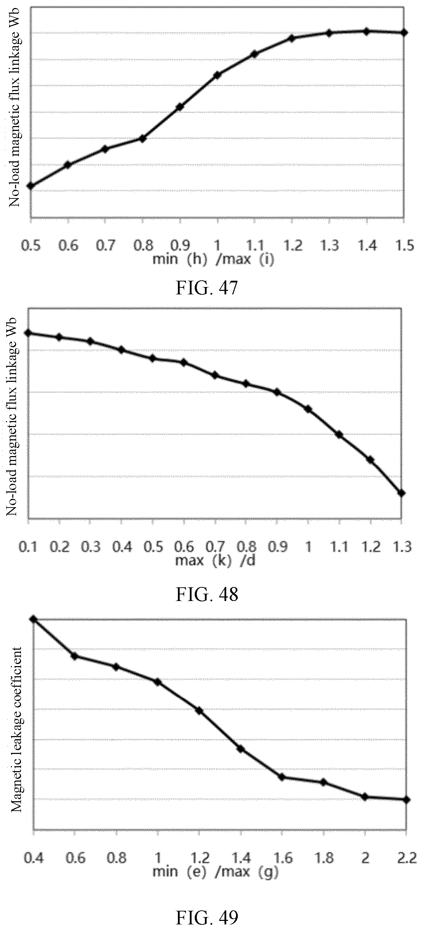

By limiting this size of the first rotor core 1, magnetic leakage of the first permanent magnet 3 close to the outer circumference side of the rotor is reduced while the assembly difficulty of the permanent magnet synchronous motor is reduced. Specifically, by limiting the maximum value of h, an air-gap with a certain width is formed between the rotor cores (the first rotor core 1 and the second rotor core 2) and the stator core 12, and thereby reducing the difficulty in assembling the rotor into the stator. By limiting the minimum value of h, it may be ensured that a magnetic supply surface of the first permanent magnet 3 has an effective magnetic circuit, and thus **the magnetic** leakage does not occur due to lack of effective axial main magnetic circuit. As shown in FIG. 47, the curve illustrates the relationship between a no-load magnetic flux linkage and the min(h)/max(i). With the increase of min(h)/max(i), the no-load magnetic flux linkage increases but the increased amplitude thereof decreases, when the min(h)/max(i) is less than 0.8, the no-load magnetic flux linkage is small due to the magnetic leakage of the first permanent magnet is large, and when the min(h)/max(i) is greater than 1.4, the no-load magnetic flux linkage is basically unchanged because the magnetic field lines of the first permanent magnet has completely passed through the magnetic circuit.

In some embodiments, when projecting onto the surface of the second rotor core 2 along the axial direction of second rotor core 2, in the projection plane, a length of a line connecting the central axis of the second rotor core 2 and a center of a radially inner edge of a pole of the first permanent magnet 3 is d, a length of a line connecting the central axis of the second rotor core 2 and any point on a radially inner edge of the first rotor core 1 is k, and max(k) ≤ d.

In some embodiments, 0.2 ≤ min(k)/d ≤ 1.

By limiting this size of the first rotor core 1, the magnetic leakage of the first permanent magnet 3 close to the rotating shaft side is reduced. Specifically, by limiting the maximum value of k, it is ensured that an end of the first permanent magnet 3 close to the rotating shaft side has an axial main magnetic circuit, and thereby avoiding the magnetic leakage due to absence of the main magnetic circuit. As shown in FIG. 48, the curve illustrates the relationship between a no-load magnetic flux linkage and the min(k)/d. When max(k)/d is less than 0.2, because an area margin of the main magnetic circuit of the first permanent magnet 3 is large, the improvement of the no-load magnetic flux linkage is small. When max (k)/d is greater than 1, because the circulation path of the magnetic field lines of the first permanent magnet 3 is limited, so that a decrease amplitude of the no-load magnetic flux linkage becomes larger.

In some embodiments, a thickness of the first rotor core 1 along an axial direction of the permanent magnet synchronous motor is c, a thickness of the second permanent magnet 4 along a magnetizing direction of the second permanent magnet 4 is m, and 0.1m ≤ c ≤ m.

In some embodiments, 0.1m ≤ c ≤ 0.5*m.

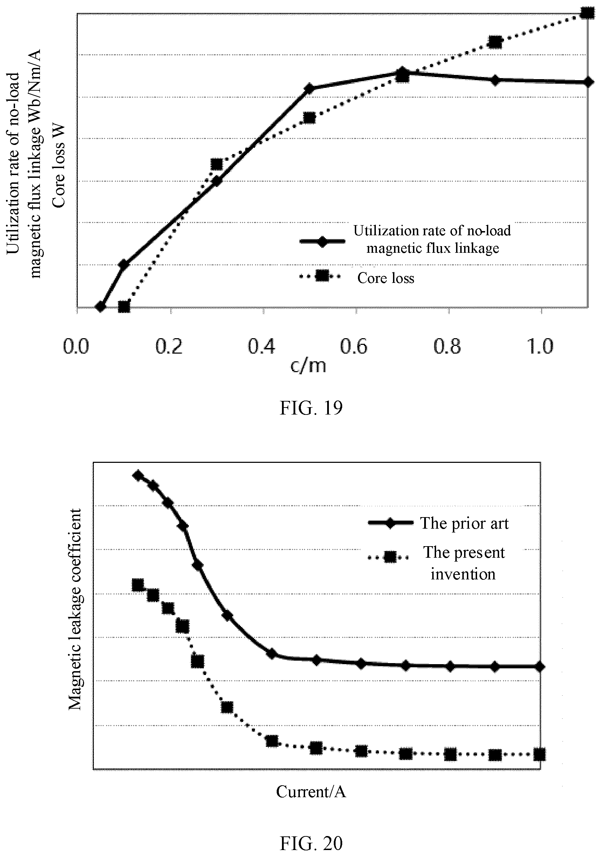

By limiting the relationship between c and m, on one hand, it prevents the first rotor core 1 from being too thin, which will cause the magnetic flux density of the first rotor core 1 to oversaturate, thereby reducing the utilization rate of the no-load magnetic flux linkage, and thus the output capacity of the permanent magnet synchronous motor is reduced; and on the other hand, a portion of the first rotor core 1 generating the core loss is be minimized, so that loss of the permanent magnet synchronous motor is reduced. As shown in FIG. 19, the curves illustrate the variation of the utilization rate of the no-load magnetic flux linkage and the core loss of the permanent magnet synchronous motor with the change of c/m. When c/m < 0.1, the utilization rate of the no-load magnetic flux linkage is low. When c/m > 1, the core loss increases significantly. When c/m ranges from 0.1 to 1, the utilization rate of the no-load magnetic flux linkage improves and then gradually stabilizes, and thus increasing trend of the core loss shows signs of slowing down. When c/m ranges from 0.1 to 0.5, the utilization rate of the no-load magnetic flux linkage increases almost linearly.

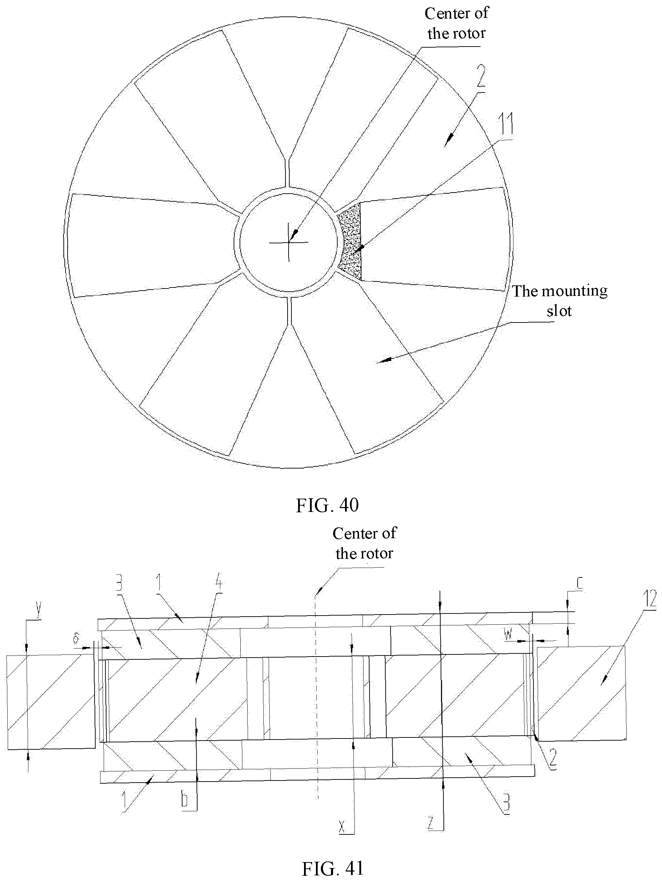

Referring to FIG. 40, in some embodiments, a side of the mounting slot close to the central axis of the second rotor core 2 is provided with a magnetic isolation groove 11. When projecting onto an end surface of the second rotor core 2 along the axial direction of second rotor core 2, in the projection plane, a projection of the first permanent magnet 3 is constructed to partially cover a projection of the magnetic isolation groove 11, that is, the projection of the first permanent magnet 3 partially overlaps with the projection of the magnetic isolation groove 11.

In some embodiments, a ratio of an area that the projection of the first permanent magnet 3 covers the projection of the magnetic isolation groove 11 to an area of the projection of the magnetic isolation groove 11 is less than or equal to 75%.

In some embodiments, the ratio of an area that the projection of the first permanent magnet 3 covers the projection of the magnetic isolation groove 11 to the area of the projection of the magnetic isolation groove 11 is less than or equal to 25%.

By limiting the projection relationship between the first permanent magnet 3 and the magnetic isolation groove 11, on one hand, a saturation effect of the second rotor core 2 caused by the first permanent magnet 3 is reduced, and on the other hand, the utilization rate of the first permanent magnet 3 is improved. Specifically, merely a portion of reinforcement ribs surrounding the magnetic isolation groove 11 are constructed as magnetic conductive structures, if the first permanent magnet 3 fully covers the magnetic isolation groove 11, a conductive area in this region is small, so that there is a high saturation level. From another view, the magnetic circuit area of the first permanent magnet 3 that covers this portion is limited, a portion of the magnetic flux linkage generated by the first permanent magnet 3 becomes ineffective magnetic flux linkage due to lack of magnetic circuit, and thereby reducing the utilization rate of the first permanent magnet.

FIG. 42 shows a no-load magnetic flux linkage and the utilization rate of the first permanent magnet under different coverage areas. Experimental verification has shown that, compared to a coverage area of 100%, when the coverage area is 80%, the no-load magnetic flux linkage merely decreases by 2.3%, and the cost of the first permanent magnet reduces by 8.9%. Compared to a coverage area of 100%, when the coverage area is 70%, the no-load magnetic flux **linkage** decreases by 6.2%, and the cost of the first permanent magnet reduces by 14.8%. Compared to a coverage area of 100%, when the coverage area is 20%, the no-load magnetic flux linkage decreases by 7.8%, and the cost of the first permanent magnet cost reduces by 20.8%. According to the present invention, a coverage area that weakens the no-load flux linkage less but significantly reduces the cost of the permanent magnet is preferably selected. If the high efficiency of the permanent magnet synchronous motor is considered, other coverage areas provided by the present invention may also be selected.

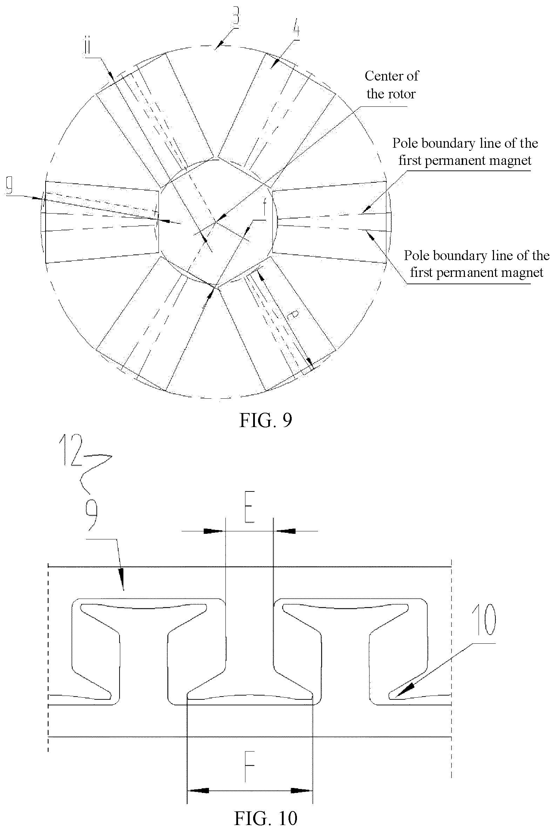

Referring to FIG. 9, in some embodiments, when projecting onto the end surface of the second rotor core 2 along the axial direction of second rotor core 2, in the projection plane, a minimum value of a radial width e of the first permanent magnet 3 is min(e), and a maximum value of a radial width g of the second permanent magnet 4 is max(g), where 0.5 ≤ min(e)/max(g) ≤ 2.

**In** some embodiments, 0.6 ≤ min(e)/max(g) ≤ 1.6.

**In** some embodiments, 0.8 ≤ min(e)/max(g) ≤ 1.6.

By limiting the relationship between the radial widths of the first permanent magnet 3 and the second permanent magnet 4, the magnetic leakage of the rotor is reduced, so that the output capacity and efficiency of the permanent magnet synchronous motor is improved. Specifically, by limiting the range of min(e)/max(g), it is ensured that the second permanent magnet 4 locates within the effective action range of the magnetic field lines of the first permanent magnet 3, and thereby reducing the magnetic leakage of the rotor. FIG. 49 shows a relationship curve between a magnetic leakage coefficient of the permanent magnet synchronous motor and min(e)/max(g). When the min(e)/max(g) is less than 0.5, the magnetic leakage coefficient is large due to the significant magnetic leakage from the second permanent magnet 4. When the min(e)/max(g) is greater than 2, the mutual flux path competition effect between the magnetic field lines of the first permanent magnet 3 and the second permanent magnet 4 is optimal, and the magnetic leakage coefficient remains basically unchanged. When the min(e)/max(g) ranges from 0.5 to 2, the leakage coefficient decreases as this ratio increases, and in a range of 0.6~1.6, a larger reduction amplitude of the leakage coefficient is large.

In some embodiments, a maximum value of a radial width o of the second rotor core 2 is max(o), and max(e) ≤ max(o).

In some embodiments, 0.3 ≤ max(e)/min(o) ≤ 1.

In some embodiments, 0.4 ≤ max(e)/max(o) ≤ 0.95.

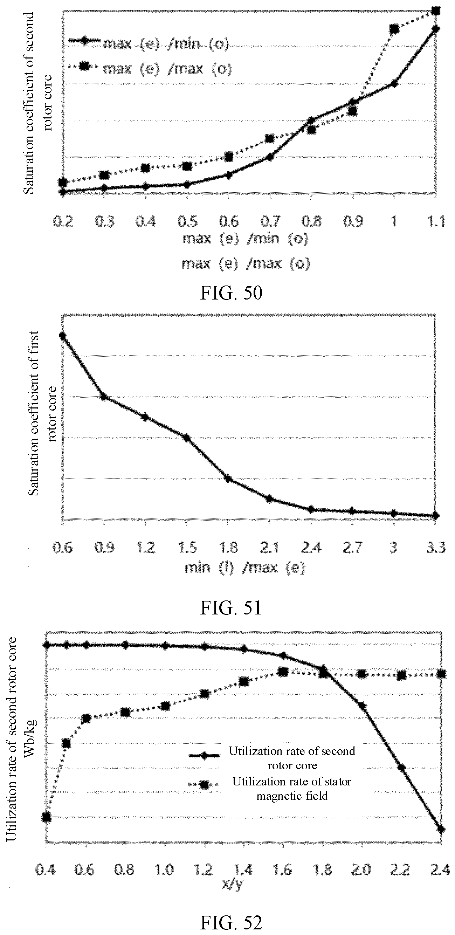

By limiting the relationship between radial widths of the first permanent magnet 3 and the second rotor core 2, a magnetic supply area and a magnetic circuit cross-sectional area of the first permanent magnet 3 have a proper ratio, so that the saturation level of the second rotor core 2 is reduced, thereby the core loss of the second rotor core 2 is reduced, and thus the efficiency of permanent magnet synchronous motor is improved. FIG. 50 shows change curves of a saturation coefficient of the second rotor core with the change of max(e)/min(o) and max(e)/max(o). When the max(e)/min(o) is less than 0.3 or the max(e)/max(o) is less than 0.4, the saturation coefficient of the second rotor core is small and basically unchanged, which causes a low magnetic density of the permanent magnet synchronous motor, and thus affecting the output capacity of the permanent magnet synchronous motor. When the max(e)/min(o) is greater than 1 or the max(e)/max(o) is greater than 0.95, increasing amplitude of the saturation coefficient of the second rotor core is larger, so that the core loss of the second rotor core increases, and thus the performance is reduced.

In some embodiments, a radial width of the first rotor core 1 is l, and 0.7 ≤ min(l)/max(e) ≤ 3.

In some embodiments, 1 ≤ min(l)/max(e) ≤ 2.

By limiting the relationship between the radial widths of the first permanent magnet 3 and the first rotor core 1, the magnetic supply surface of the first permanent magnet 3 and the magnetic circuit cross-sectional area of the first permanent magnet 3 may have a proper ratio, so that the saturation level of the first rotor core 1 is reduced, thereby reducing the core loss of the first rotor core 1, and thus the efficiency of the permanent magnet synchronous motor is improved. As shown in FIG. 51, s the curve illustrates the variation of a saturation coefficient of the first rotor core with the change of min(l)/max(e). When the min(l)/max(e) is less than 0.7, the saturation coefficient of the first rotor core is high, so that the core loss of the first rotor core is high. When the min(l)/max(e) is greater than 3, the saturation coefficient of the first rotor core remains basically unchanged. When the min(l)/max(e) ranges from 0.7 to 3, the saturation coefficient of the first rotor core decreases as the ratio increases, and with a larger reduction amplitude in a range of 1~2.

Referring to FIG. 38 and FIG. 46, in some embodiments, when projecting onto the end surface of the second rotor core 2 along the axial direction of second rotor core 2, in the projection plane, an area of a pole of the first permanent magnet 3 is s1, an axial height of the second rotor core 2 along a central axis direction of the second rotor core 2 is x, and s1 is inversely proportional to x.

In some embodiments, s1 = -B*x + D, where a value of B ranges from 25 to 100, and a value of D ranges from 400 to 1600.

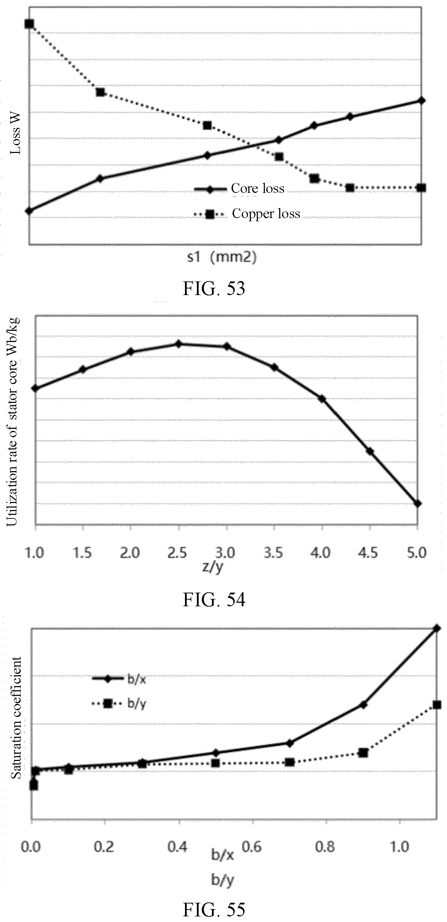

By limiting the relationship between s1 and x, an appropriate ratio between the first permanent magnet 3 and the second rotor core 2 is achieved, so that the utilization rates of both the permanent magnet 3 and the second rotor core 2 is improved, and meanwhile copper loss and core loss of the permanent magnet synchronous motor is reduced. Specifically, s1 represents a magnetic supply area of one pole of the first permanent magnet 3, which determines a strength of a magnetic field, while x determines a strength of the tangential/radial magnetic field. When s1 is greater, the axial magnetic field is stronger, and the permanent magnet synchronous motor may reach an optimal saturation level even with a relatively weak tangential/radial magnetic field, and vice versa. At this point, if continue increasing s1 or x, the axial or the tangential/radial magnetic fields is enhanced, but since the permanent magnet synchronous motor is already saturated, so that the copper loss decreases slightly, while the core loss increases significantly. Therefore, the utilization rates of the first permanent magnet 3 and the second rotor core 2 are reduced, which not only degrades the performance of the permanent magnet synchronous motor, but also causes material waste. Consequently, s1 and x are inversely proportional. Additionally, by further limiting the relationship between s1 and x, the copper loss and the core loss of the permanent magnet synchronous motor is balanced under different ratios of the axial magnetic field and the tangential magnetic field, and thereby improving the performance. As shown in FIG. 53, the curve illustrates the variation of loss of the permanent magnet synchronous motor with the change of s1 at a given x. With the increase of s1, magnetic flux linkage provided by the first permanent magnet 3 increases, so that reducing the copper loss until the permanent magnet synchronous motor saturates, after which the copper loss remains essentially unchanged. With the increase of s1, the saturation level of the motor increases, so that the core loss increases. The optimal ratio between s1 and x is achieved when the copper loss and the core loss reach balance.

In some embodiments, diameters of the first permanent magnets 3 at two ends of the second rotor core 2 are the same. With this arrangement, on one hand, the magnetic field lines of the first permanent magnets 3 on two end surfaces of the second rotor core 2 form a closed circuit, and thereby increasing magnetic flux of the permanent magnet synchronous motor; and on the other hand, axial forces at two ends of the rotor may counteract.

In some embodiments, the number of pole pairs of the first permanent magnet 3 is q, and the number of pole pairs of the second rotor core 2 is p, where q ≤ p. In some embodiments, q = p. By limiting the relationship between q and p, the output torque of the permanent magnet synchronous motor is increased while maximizing the utilization rate of the first permanent magnet.

In some embodiments, when projecting onto the end surface of the second rotor core 2 along the axial direction of second rotor core 2, in the projection plane, a side edge of the first permanent magnet 3 close to the outer circumference side of the rotor is an arc and/or a straight line, and/or, a sidewall of the first permanent magnet 3 close to the central axis of the second rotor core 2 is an arc and/or a straight line. Therefore, on one hand, the shape of the first permanent magnet 3 is flexibly selected based on a space of an end surface of the rotor to simplify the rotor structure, and on the other hand, the shape of the first permanent magnet 3 is set according to processing requirements to reduce the processing cost.

In some embodiments, the first rotor core 1 is equipped with a counterweight structure to adjust dynamic balance of the permanent magnet synchronous motor, with no limitations about specific shape or material of the counterweight structure.

Referring to FIG. 41, according to an embodiment of the present invention, a permanent magnet synchronous motor includes a rotor structure, and the rotor structure is the rotor structure described above.

The permanent magnet synchronous motor also includes a stator structure, and the stator structure is provided at a radial outer side of the rotor structure.

As shown in FIG. 10, in some embodiments, the stator structure includes a stator core 12, the stator core 12 includes a tooth-slot interleaved stator lamination 9, the tooth-slot interleaved stator lamination 9 is provided with two-segments of flat-bottomed tooth shoes 10, a tooth width of the tooth-slot interleaved stator lamination 9 is E, a tooth shoe width is F, and E/max(F) ≥ 0.3.

The stator core 12 adopts the tooth-slot interleaved rotor laminations 9, which may increase a material utilization rate of stator silicon steel sheets from 20% to over 40%, so that the cost of the permanent magnet synchronous motor is significantly reduced, and thus it is more suitable for engineering applications. The two-segments of flat-bottom tooth shoes 10 may reduce tooth harmonics of the permanent magnet synchronous motor and improve reliability of the permanent magnet synchronous motor. Meanwhile, by limiting the relationship between E and max(F), saturation of the stator tooth portion is reduced, and thus the core loss of the permanent magnet synchronous motor is reduced.

In some embodiments, the stator structure includes a stator core 12, and an outer circumferential diameter of the first permanent magnet 3 located at least one end of the second rotor core 2 is smaller than an inner diameter of the stator core 12.

In some embodiments, an outer circumferential diameter of the first permanent magnet 3 located at least one end of the second rotor core 2 is smaller than a maximum diameter among outer circumferential diameters of the first rotor core 1 and the second rotor core 2.

This configuration allows as much of the first permanent magnets 3 contact with the second rotor core 2, and thereby improving the utilization rate of the first permanent magnets 3.

In some embodiments, the stator structure is sleeved on the periphery of the rotor structure, an air-gap is formed between the stator structure and the rotor structure, a difference between a maximum outer diameter of the second rotor core 2 of the rotor structure and a maximum outer diameter of the first permanent magnet 3 is w, and w≥0.

In some embodiments, a thickness of the air-gap is δ, and 0.5*min(δ) ≤ w ≤ 14*min(δ). With this limiting, under the condition that the air-gap is saturated, the magnetic field lines generated by the permanent magnets are able to enter the air-gap as the effective magnetic field lines, and thus the output torque of the permanent magnet synchronous motor is improved.

In some embodiments, the stator structure includes a stator core 12, and the stator core 12 is sleeved outside the second rotor core 2 of the rotor structure.

In some embodiments, a height of the second rotor core 2 along an axial direction of the permanent magnet synchronous motor is x, a height of the stator core 12 along the axial direction of the permanent magnet synchronous motor is y, and x/y ≤ 2.

In some embodiments, 0.5 ≤ x/y ≤ 1.5.

In FIG. 41, x is an axial length of the second rotor core 2, y is an axial length of the stator core 12, and z is an axial length of the entire permanent magnet synchronous motor rotor structure.

By limiting the height ratio of the second rotor core 2 to the stator core 12, the utilization rates of the second rotor core 2 and the stator magnetic field is improved, and thus the cost of the permanent magnet synchronous motor is reduced; and meanwhile, the core loss of the stator core 12 is reduced, and thus the efficiency of the permanent magnet synchronous motor is improved. As shown in FIG. 52, the curves illustrate the variation of utilization rates of the second rotor core and the stator magnetic field with the change of x/y. When x/y is greater than 1.5, a decrease amplitude of the utilization rate of the second rotor core begins to increase; and when x/y is less than 0.5, the decrease amplitude of the utilization rate of the stator magnetic field increases. When x/y is greater than 2, because the second rotor core 2 is too much higher than the stator core 12, a portion of the rotor magnetic field lines cannot enter the stator, and thus the utilization rate of the rotor core is sharply reduced.

In some embodiments, a total height of the rotor structure along an axial direction of the permanent magnet synchronous motor is z, a height of the stator core 12 along the axial direction of the permanent magnet synchronous motor is y, and z/y ≤ 4.

In some embodiments, 1.0 ≤ z/y ≤ 3.0.

By limiting the height ratio of the stator core 12 to the rotor structure, the utilization rate of the stator core 12 is improved, and thus the cost of the permanent magnet synchronous motor is reduced; and meanwhile, a volume of the portion of the stator generated core loss is reduced, and thus the core loss is reduced. As shown in FIG. 54, the curve illustrates the relationship between a utilization rate of the stator core and z/y. With the increase of z/y, the utilization rate of the stator core first increases and then decreases. When z/y is greater than 4, a reduction amplitude of the utilization rate of the stator core is increased because a ratio of stacking height of the rotor to the stator core exceeds an optimal ratio. When z/y ranges from 1 to 3, the utilization rate of the stator core is relatively high.

In some embodiments, a height of the second rotor core 2 along an axial direction of the permanent magnet synchronous motor is x, a height of the stator core 12 along the axial direction of the permanent magnet synchronous motor is y, a height of the first permanent magnet 3 in the axial direction of the permanent magnet synchronous motor is b, 0.01x ≤ b ≤ 0.7x, and/or 0.015y ≤ b ≤ 0.9y.

By limiting the relationship between the thickness of the first permanent magnet 3 and the heights of the stator core 12 and the rotor core, the saturation of the stator core and the rotor core caused by the magnetic field lines of the first permanent magnet 3 is reduced, and thus the core loss of the permanent magnet synchronous motor is reduced. As shown in FIG. 55, the curves illustrate the variation of a saturation coefficient of the permanent magnet synchronous motor with the change of b/x and b/y. With the increase of b/x and b/y, the saturation coefficient of the permanent magnet synchronous motor increases. When b/x is less than 0.01 or b/y is less than 0.015, the saturation coefficient of the permanent magnet synchronous motor is too low, so that the output capacity of the permanent magnet synchronous motor is affected. When b/x is greater than 0.7 or b/y is greater than 0.9, the saturation coefficient of the permanent magnet synchronous motor is suddenly increased due to saturation increase caused by the magnetic field lines of the first permanent magnet.

It should be noted that, the terms used herein are merely for the purpose of describing particular embodiments, and are not intended to limit the exemplary embodiments of the present application. As used herein, unless the context clearly indicates otherwise, the singular forms are intended to include the plural forms as well. Furthermore, it shall be understood that when the terms "contain" and/or "include" are used in this specification, they specify the presence of stated features, steps, operations, elements, components, and/or combinations thereof.

It should be understood that, the terms "first", "second" and the like used in the specification and claims of the present application as well as in the above-mentioned drawings are for distinguishing similar objects, and not necessarily for describing a particular order or sequence. It should be understood that, the data used in this way may be interchanged under appropriate circumstances, so that the embodiments of the present application described herein can be implemented in orders other than those illustrated or described herein.

The above descriptions are merely preferred embodiments of the present invention, and are not intended to limit the present invention. For those skilled in the art, the present invention may have various modifications and changes. Any modifications, equivalent substitutions, improvements and the like made within the spirit and principles of the present invention shall be included within the protection scope of the present invention.

## Claims

1. **A rotor** structure, comprising:
a first rotor core (1);
a second rotor core (2) being provided with a plurality of mounting slots at intervals in a circumferential direction, a side of the plurality of mounting slots close to a central axis of the second rotor core (2) being provided with a magnetic isolation groove (11);
first permanent magnets (3), which are axially magnetized; and
a plurality of second permanent magnets (4), the plurality of second permanent magnets (4) being mounted in the plurality of mounting slots in one-to-one correspondence, wherein
two ends of the second rotor core (2) in an axial direction are respectively provided with the first permanent magnets (3), and a side of the first permanent magnet (3) away from the second rotor core (2) along the axial direction is provided with the first rotor core (1); and
when projecting onto an end surface of the second rotor core (2) along the axial direction, in a projection plane, a projection of the first permanent magnet (3) is constructed to partially cover a projection of the magnetic isolation groove (11).

2. The rotor structure according to claim 1, wherein a ratio of an area that the projection of the first permanent magnet (3) covers the projection of the magnetic isolation groove (11) to an area of the projection of the magnetic isolation groove (11) is less than or equal to 75%;
optionally, the ratio of the area that the projection of the first permanent magnet (3) covers the projection of the magnetic isolation groove (11) to the area of the projection of the magnetic isolation groove (11) is less than or equal to 25%.

3. The rotor structure according to claim 1 or claim 2, wherein when projecting onto the end surface of the second rotor core (2) in the axial direction, in the projection plane, a deviation between a geometric center line of at least a pair of poles of the first permanent magnet (3) and a corresponding rotor magnetic field center line of the second rotor core (2) is less than or equal to 5°.

4. The rotor structure according to claim 3, wherein when projecting onto the end surface of the second rotor core (2) along an axial direction of the second rotor core (2), in the projection plane, an area of a pole of the first permanent magnet (3) is s1, an area of a pole of the second rotor core (2) is s2, and s1/s2 ≥ 1;
optionally, 1.05 ≤ s1/s2 ≤ 1.95.

5. The rotor structure according to claim 3 or claim 4, wherein when projecting onto the end surface of the second rotor core (2) along the axial direction, in the projection plane, an area of a pole of the first permanent magnet (3) is s1, an area of a pole of the second permanent magnet (4) is s3, in a cross section passing through a central axis of the second rotor core (2), an area of the pole of the first permanent magnet (3) is s4, and an area of the pole of the second permanent magnet (4) is s5, wherein 0.8*s3 ≤ s1 ≤ 2.4*s5, and/or 0.3*s3 ≤ s4 ≤ 0.8*s5.

6. The rotor structure according to any one of claims 3 to 5, wherein when projecting onto the end surface of the second rotor core (2) along the axial direction, in the projection plane, an included angle between lines connecting two endpoints of the pole of the first permanent magnet (3) close to an outer circumference side of the rotor and a center of the second rotor core (2) is α, an included angle between lines connecting two endpoints of a magnetic conductive portion of a pole of the second rotor core (2) close to the outer circumference side of the rotor and the center of the second rotor core (2) is β, and α/β ≥ 1;
optionally, 1 ≤ α/β ≤ 1.62.

7. The rotor structure according to any one of claims 1 to 6, wherein when projecting onto the end surface of the second rotor core (2) along the axial direction, in the projection plane, an area of a pole of the first permanent magnet (3) is s1, a length of a line connecting the central axis and any point on an outer circumference of the second rotor core (2) is j, and 1 ≤ s1/max(j) ≤ 20;
optionally, 3 ≤ s1/max(j) ≤ 16.

8. The rotor structure according to any one of claims 3 to 6, wherein when projecting onto the end surface of the second rotor core (2) along the axial direction, in the projection plane, an area of a pole of the first permanent magnet (3) is s1, a thickness of the first permanent magnet (3) along the axial direction of the second rotor core (2) is b, and s1 is inversely proportional to b;
optionally, a relationship between s1 and b satisfies a dimensionless formula s1 =A*b + C, wherein a value of A ranges from 5 to 20, and a value of C ranges from 120 to 400.

9. The rotor structure according to any one of claims 3 to 6 and 8, wherein when projecting onto the end surface of the second rotor core (2) along the axial direction of the second rotor core (2), in the projection plane, an area of a pole of the first permanent magnet (3) is s1, an area of a pole of the second rotor core (2) is s2, an area of a pole of the second permanent magnet (4) is s3, and 0.2 ≤ s2/(s1+s3) ≤ 1;
optionally, 0.3 ≤ s2/(s1+s3) ≤ 0.6.

10. The rotor structure according to any one of claims 1 to 9, wherein when projecting onto the end surface of the second rotor core (2) along the axial direction, in the projection plane, a length of a line connecting the central axis of the second rotor core (2) and a center of an end edge of a pole of the first permanent magnet (3) close to an outer circumferential side of the rotor is i, a maximum value of length of lines connecting the central axis of the second rotor core (2) and points on an outer circumference of a rotor of the second rotor core (2) is max(j), and max(i) ≤ max(j); and/or
when projecting onto the end surface of the second rotor core (2) along the axial direction, in the projection plane, a length of a line connecting the central axis of the second rotor core (2) and a center of an end edge of a pole of the second permanent magnet (4) close to an outer circumferential side of the rotor is ii, and max(j) ≥ max(i) ≥ 0.8*ii; optionally, max(j) ≥ max(i)≥ 0.95*ii.

11. The rotor structure according to any one of claims 1 to 10, wherein when projecting onto the end surface of the second rotor core (2) along the axial direction, in the projection plane, a minimum value of a radial width e of the first permanent magnet (3) is min(e), and a maximum value of a radial width g of the second permanent magnet (4) is max(g), wherein 0.5 ≤ min(e)/max(g) ≤ 2;
optionally, 0.6 ≤ min(e)/max(g) ≤ 1.6.

12. The rotor structure according to any one of claims 1 to11, wherein when projecting onto the end surface of the second rotor core (2) along the axial direction, in the projection plane, an area of a pole of the first permanent magnet (3) is s1, an axial height of the second rotor core (2) along a central axis direction of the second rotor core (2) is x, and s1 is inversely proportional to x;
optionally, s1 = B*x + D, wherein a value of B ranges from 25 to100, and a value of D ranges from 400 to 1600.

13. The rotor structure according to any one of claims 1 to 12, wherein when projecting onto **the end** surface of the second rotor core (2) along the axial direction, in the projection plane, a sum of included angles formed by lines connecting two endpoints of each pole of the first permanent magnet (3) close to an outer circumference side of the rotor and a center of the second rotor core (2) is α*2q, a ratio of the sum of the included angles to an circumferential angle of the second rotor core (2) is a, a = α*2q/360, a thickness of the first permanent magnet (3) in an axial direction of the second rotor core (2) is b, and 2 ≤ b/a ≤ 6, wherein q is a quantity of pole pairs of the first permanent magnet (3).

14. The rotor structure according to any one of claims 1 to 13, wherein when projecting on the end surface of the second rotor core (2) along the axial direction, in the projection plane, a length of a line connecting the central axis of the second rotor core (2) and a center of a radially inner edge of a pole of the first permanent magnet (3) is d, a length of a line connecting the central axis of the second rotor core (2) and a center of an end edge of a pole of the first permanent magnet (3) close to an outer circumferential side of the rotor is i, and 0.2 ≤ d/max(i) ≤ 0.8;
optionally, 0.3 ≤ d/max(i) ≤ 0.6.

15. The rotor structure according to any one of claims 1 to 14, wherein when projecting onto the end surface of the second rotor core (2) along the axial direction, in the projection plane, a length of a line connecting the central axis of the second rotor core (2) and a center of a radially inner edge of a pole of the first permanent magnet (3) is d, a length of a line connecting the central axis of the second rotor core (2) and a center of a radially inner edge of a pole of the second permanent magnet (3) is f, and 0 ≤ d/f ≤ 2;
optionally, 0.8 ≤ d/f ≤ 1.6.

16. The rotor structure according to any one of claims 1 to 15, wherein diameters of the two first permanent magnets (3) at two ends of the second rotor core (2) are same.

17. A permanent magnet synchronous motor, comprising a stator structure and the rotor structure according to any one of claims 1 to 16, wherein the stator structure is sleeved outside the rotor structure.

18. The permanent magnet synchronous motor according to claim 17, wherein the stator structure comprises a stator core (12), a total height of the rotor structure along an axial direction of the permanent magnet synchronous motor is z, a height of the stator core (12) along the axial direction of the permanent magnet synchronous motor is y, and z/y ≤ 4;
optionally, 1.0 ≤ z/y ≤ 3.0.

19. The permanent magnet synchronous motor according to claim 17 or claim 18, wherein the stator structure comprises a stator core (12), the stator core (12) comprises an tooth-slot interleaved stator lamination (9), the tooth-slot stator interleaved lamination (9) is provided with two segments of flat-bottomed tooth shoes (10), a tooth width of the tooth-slot stator interleaved lamination (9) is E, a tooth shoe width is F, and E/max(F) ≥ 0.3.

20. The permanent magnet synchronous motor according to any one of claims 17 to 19, wherein, the stator structure comprises a stator core (12), and an outer circumferential diameter of the first permanent magnets (3) located at least one end of the second rotor core (2) is smaller than an inner diameter of the stator core (12); and/or
an outer circumferential diameter of the first permanent magnets (3) located at least one end of the second rotor core (2) is smaller than a maximum diameter among outer circumferential diameters of the first rotor core (1) and the second rotor core (2).
